(19) **Europäisches Patentamt / European Patent Office / Office européen des brevets**

(11) **EP 4 047 676 A1**

(12) **EUROPEAN PATENT APPLICATION**
published in accordance with Art. 153(4) EPC

(43) Date of publication:
**24.08.2022 Bulletin 2022/34**

(21) Application number: **20875716.1**

(22) Date of filing: **14.10.2020**

(51) International Patent Classification (IPC):
*H01M 4/13* (2010.01)   *H01M 4/137* (2010.01)
*H01M 4/139* (2010.01)   *H01M 4/1397* (2010.01)
*H01M 4/62* (2006.01)   *H01G 11/06* (2013.01)
*H01G 11/26* (2013.01)   *H01G 11/30* (2013.01)
*H01G 11/50* (2013.01)   *H01G 11/56* (2013.01)
*H01G 11/86* (2013.01)   *H01M 10/052* (2010.01)
*H01M 10/054* (2010.01)   *H01M 10/0562* (2010.01)
*H01M 10/058* (2010.01)

(52) Cooperative Patent Classification (CPC):
**H01G 11/06; H01G 11/26; H01G 11/30;
H01G 11/50; H01G 11/56; H01G 11/86; H01M 4/13;
H01M 4/137; H01M 4/139; H01M 4/1397;
H01M 4/62; H01M 10/052; H01M 10/054;
H01M 10/0562; H01M 10/058;** (Cont.)

(86) International application number:
**PCT/JP2020/038686**

(87) International publication number:
**WO 2021/075440 (22.04.2021 Gazette 2021/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.10.2019   JP 2019188792
15.10.2019   JP 2019188793
15.10.2019   JP 2019188794**

(71) Applicants:
• **Attaccato Limited Liability Company
Izumi-shi, Osaka 594-0004 (JP)**
• **ADEKA CORPORATION
Tokyo 116-0012 (JP)**

(72) Inventors:
• **MUKAI Takashi
Izumi-shi Osaka 594-0004 (JP)**
• **YAMASHITA Naoto
Izumi-shi Osaka 594-0004 (JP)**
• **IKEUCHI Yuta
Izumi-shi Osaka 594-0004 (JP)**
• **SAKAMOTO Taichi
Izumi-shi Osaka 594-0004 (JP)**
• **KAKIAGE Kenji
Tokyo 116-0012 (JP)**
• **YOKOMIZO Tomofumi
Tokyo 116-0012 (JP)**
• **AOYAMA Yohei
Tokyo 116-0012 (JP)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(54) **ELECTRODE FOR NON-AQUEOUS ELECTROLYTE POWER STORAGE DEVICE, NON-AQUEOUS ELECTROLYTE POWER STORAGE DEVICE, AND METHOD FOR PRODUCING SAME**

(57)    Provided is a non-aqueous electrolyte power storage device that traps hydrogen sulfide gas generated from the inside of a power storage device for some reason in the power storage device and prevents outflow of the hydrogen sulfide gas to the outside of the power storage device. A non-aqueous electrolyte power storage device

**(Cont. next page)**

in which a coating material having a silanol group is present at least on a surface of an electrode active material layer and a sulfur-based material is contained in a cell, the electrode active material layer contains an electrode active material and a resin-based binder, the electrode active material is an active material capable of being alloyed with a metal element identical to an ion species responsible for electrical conduction or an active material capable of absorbing ions responsible for electrical conduction, and the coating material having a silanol group is a silicate containing a siloxane bond as a component or a silica fine particle aggregate (containing a siloxane bond as a component).

FIG. 1

BARRIER MATERIAL OF MOISTURE AND TRAPPING MATERIAL OF HYDROGEN SULFIDE GAS
BINDER AND CONDUCTIVE AUXILIARY AGENT
ACTIVE MATERIAL
CURRENT COLLECTOR

CROSS−SECTIONAL EXAMPLE OF ELECTRODE COATED WITH
TRAPPING MATERIAL OF HYDROGEN SULFIDE GAS

(52) Cooperative Patent Classification (CPC): (Cont.)
Y02E 60/10; Y02P 70/50

**Description**

Technical Field

The present invention relates to a non-aqueous electrolyte power storage device that traps hydrogen sulfide gas generated from the inside of the power storage device for some reason in the power storage device and prevents outflow of the hydrogen sulfide gas to the outside of the power storage device, a method for producing the non-aqueous electrolyte power storage device, and an electrode used in the non-aqueous electrolyte power storage device.

Background Art

In recent years, the market size of power storage devices such as secondary batteries and capacitors has been expanded. In particular, the application field of secondary batteries having a high energy density has been expanded from power sources for portable devices such as smart phones and tablet terminals to electric vehicles (hybrid vehicle (HEV), plug-in hybrid vehicle (PHEV), electric vehicle (EV), fuel cell vehicle (FCV)) and power storage, and the like in recent years. In particular, automobile manufacturers are actively developing and commercializing electric vehicles and the like in order to respond to environmental regulations aimed at reducing automobile exhaust gas and carbon dioxide gas worldwide. The annual production amount of automobile batteries in 2017 is estimated to be about 50 GWh, and is expected to reach about 150 GWh (about 3 times of current portable device applications) around 2020.

In the field of power storage and the like, since power generation varies depending on the environment, a large power storage system is required. Recently, the cost of power generation using renewable energy such as wind power and sunlight has been equal to or less than half of that of coal-fired power generation, and occupies 1/5 of the world power generation share in 2016. In view of future popularization, a battery production amount that is five times or more the current amount is required.

As described above, power storage devices such as secondary batteries and capacitors are indispensable in energy saving, introduction of new energy, clean automobiles, and the like, and are positioned as important key devices also from the viewpoint of economic growth.

Typical examples of the current general-purpose secondary battery include a lead battery, a nickel-cadmium (Ni-Cd) battery, a nickel-hydrogen (Ni-MH) battery, and a lithium ion battery. The use of the lithium ion battery as a non-aqueous electrolyte secondary battery is increasing due to the characteristics of being small, lightweight, high voltage, and having no memory effect. The non-aqueous electrolyte battery also includes a sodium ion battery, a potassium ion battery, a magnesium ion battery, and a calcium ion battery. The non-aqueous electrolyte battery includes a positive electrode, a negative electrode, a separator, an electrolytic solution or an electrolyte, and an exterior body (also referred to as a battery container, a storage case, or a casing).

Examples of the capacitor include an aluminum electrolytic capacitor, a ceramic capacitor, an electric double layer capacitor, and a lithium ion capacitor. Among these, the lithium ion capacitor is a power storage device that utilizes the principle of a general electric double layer capacitor, and that uses an active material capable of absorbing and desorbing lithium ions and a non-aqueous electrolyte for either a positive electrode material or a negative electrode material. In addition, recently, research and development of power storage devices using sodium ions, potassium ions, magnesium ions, calcium ions, and the like in place of lithium ions have also been advanced. Such an ion capacitor includes a positive electrode, a negative electrode, a separator, an electrolytic solution or an electrolyte, and an exterior body (also referred to as a battery container, a storage case, or a casing).

Electrodes such as a positive electrode and a negative electrode are composed of an active material, a conductive auxiliary agent, a resin-based binder, and a current collector. An electrode is generally produced by mixing an active material, a conductive auxiliary agent, and an organic (resin) binder with a solvent to form a slurry, coating a current collector with the slurry, drying the slurry, and rolling the resulting product by a roll press or the like.

The electrolytic solution is a non-aqueous electrolyte, and in a commercially available lithium ion battery, lithium hexafluorophosphate ($LiPF_6$) is mainly dissolved in a carbonate-based organic solvent and used.

The positive electrode active material used in a commercially available battery is lithium cobaltate ($LiCoO_2$), a ternary material ($Li(Ni, Co, Mn)O_2$), an NCA material ($Li(Ni, Co, Al)O_2$), and the like. Most of them are oxides containing rare metals such as cobalt (Co) and nickel (Ni) and elements whose production regions are unevenly distributed. Regarding rare metals and resources whose production regions are unevenly distributed, there is a risk that market prices may fluctuate or availability thereof may become difficult. Therefore, there is a demand for development of a battery which is inexpensive and easily available and is formed of a material whose production sites are not unevenly distributed.

In addition, although these oxide-based positive electrode active materials have a high discharge voltage of 3 V (vs. $Li/Li^+$) or more, the effective electric capacity is about 140 to 220 mAh/g, and thus further increase in capacity is desired.

The increase in capacity of the battery is a problem that is continuously required for all applications, but the risk of thermal runaway increases as the electric capacity of the battery increases. In many commercially available lithium ion batteries, lithium ions in the oxide of the positive electrode move between layers of graphite to be intercalated when the battery is charged. When the battery is heated in this state, the positive electrode active material is thermally decomposed at about 200°C and oxygen is released, so that the electrolytic solution may be vigorously combusted.

Incidentally, sulfur is low in material cost and abundant in resources, and about 70% of the production amount thereof in the world is recovered by desulfurization treatment at the time of petroleum refining. Many allotropes and crystal polymorphs of sulfur are known, and the melting point (mp.) is about 113°C for $\alpha$ sulfur (rhombic sulfur), about 120°C for $\beta$ sulfur (monoclinic sulfur), and about 107°C for $\gamma$ sulfur (monoclinic sulfur). The boiling point (bp.) of each type of sulfur is about 440°C. Sulfur is widely used as a raw material for sulfuric acid chemical industry, fertilizer, rubber, gunpowder, and the like, but the production amount thereof is larger than the consumption amount at present. Therefore, in recent years, the problem of final disposal of surplus sulfur to be recovered is becoming serious.

While various applications of sulfur are developed, a technique of using sulfur as an active material of an electrode (positive electrode or negative electrode) or a solid electrolyte has attracted attention. Sulfur has a discharge voltage of about 2 V (vs. Li/Li$^+$), which is lower than that of a transition metal oxide-based positive electrode material and higher than that of a graphite-based negative electrode material, but the theoretical electric capacity thereof is as very large as 1,672 mAh/g. In addition, sulfur does not release oxygen by thermal decomposition, and thus has attracted attention as a material having excellent safety.

However, sulfur has an electrical resistivity of $2.0 \times 10^{15}$ $\Omega$m (20°C), which is higher than that of soda glass ($10^9$ to $^{11}$ $\Omega$m (20°C)), polyester ($10^{12}$ to $^{14}$ $\Omega$m (20°C)), vinyl chloride ($10^{13}$ $\Omega$m (20°C)), natural rubber ($10^{14}$ $\Omega$m (20°C)), and the like, and is known as a material having high insulating properties.

Therefore, when sulfur is used as an electrode active material (electrode material), improvement in electron conductivity is required.

There is also a method for improving the electron conductivity of a material having poor electron conductivity (high electrical resistivity) by thermally decomposing a carbon precursor (organic substance, hydrocarbon gas, or the like) to form a composite of the material and carbon. However, since the boiling point of sulfur is lower than the temperature required for thermally decomposing the carbon precursor, application of this method is extremely difficult.

In addition, in the electrode using sulfur, lithium polysulfide ($Li_2S_2$ to $_8$), a low molecular weight sulfur compound, and the like are generated through a lithiation reaction (discharge reaction when sulfur is used as a positive electrode, and charge reaction when sulfur is used as a negative electrode). These compounds are eluted in a carbonate-based solvent in an electrolytic solution, so that practical cycle characteristics cannot be obtained. Since the elution amount of lithium polysulfide into the electrolytic solution tends to increase as the temperature increases, the operation of the battery at high temperature becomes more difficult.

In order to improve conductivity and suppress elution of lithium polysulfide and the like, combination or modification of sulfur with carbon, an organic substance, or the like is performed. For example, as a method for imparting conductivity and suppressing elution of lithium polysulfide, an organic disulfide compound (for example, Patent Literature 1), a sulfide polymer (for example, Patent Literature 2), carbon polysulfide (for example, Patent Literatures 3 and 4), sulfur-modified polyacrylonitrile (for example, Patent Literature 5, Non Patent Literatures 1 and 2), sulfur-modified rubber (for example, Patent Literature 6 and Non Patent Literature 3), and the like have been proposed.

Non Patent Literature 1 shows results of thermogravimetric (TG) measurement of elemental sulfur and sulfur-modified polyacrylonitrile (S-PAN). Elemental sulfur starts to decrease in weight from around 200°C, and rapidly decreases in weight due to evaporation until around 320°C, whereas S-PAN only decreases in weight by about 20% at 600°C. This result shows that S-PAN has higher heat resistance than that of elemental sulfur.

In addition, for the purpose of suppressing elution of lithium polysulfide, a battery using a polymer electrolyte (for example, Patent Literature 7), a battery using an ionic liquid (Patent Literature 8), and a battery using a solid electrolyte (for example, Patent Literature 9 and Non Patent Literature 4) have been proposed. Polymer electrolytes and solid electrolytes have been hitherto inferior in ionic conductivity to electrolytic solutions, and it has been difficult for a battery using such electrolytes to operate at room temperature or in a low temperature environment. However, research and development of electrolyte materials have progressed, and some materials exhibiting high ionic conductivity have been found recently.

The polymer electrolyte can be classified into an intrinsic polymer electrolyte and a gel polymer electrolyte. The intrinsic polymer electrolyte is an electrolyte containing only a polymer and an electrolyte salt (supporting salt). The gel polymer electrolyte is an electrolyte obtained by adding an electrolytic solution as a plasticizer to the intrinsic polymer electrolyte, and immobilizing the electrolyte solution.

The ionic liquid is a salt that exists as a liquid at 150°C or lower, can cause a current to flow without dissolving an electrolyte salt, and is also called an ionic liquid, a low melting point molten salt, or the like. The ionic liquid can be roughly classified into a pyridine ionic liquid, an alicyclic amine ionic liquid, and an aliphatic amine ionic liquid depending on the type of cation.

As the solid electrolyte, a sulfur-based solid electrolyte, an oxide-based solid electrolyte, and a hydride-based solid electrolyte are known. Many of solid electrolytes are an amorphous (glass) or crystalline substance composed of an alkali metal salt and an inorganic derivative. Since the counter anion does not move in this electrolyte, the transport number of ion species (indicating, for example, lithium ions in a lithium ion battery, sodium ions in a sodium ion battery, and potassium ions in a potassium ion battery) responsible for electrical conduction becomes almost 1, side reactions are suppressed, thus improving the utilization ratio of the battery. In addition, solid electrolytes, which do not require the use of an organic solvent as in a conventional lithium ion battery using an electrolytic solution, cause no ignition of a gas or a liquid, liquid leakage, or the like. Therefore, solid electrolytes are expected to be a material for a secondary battery or an ion capacitor excellent in safety.

The sulfur-based solid electrolyte is used as a sulfur compound with an alkali metal element. For example, sulfur-based solid electrolytes such as $A_2S-P_2S_5$, $A_2S-B_2S_3$, $A_2S-SiS_2$, and $A_2S-GeS_2$ are representative (where A represents an alkali metal element). Further, an attempt has been made to improve the ionic conductivity by adding other elements to these sulfur-based solid electrolytes.

However, in an electrode using a sulfide-based material in a reduced state (meaning an electrode in a discharged state in the positive electrode, and an electrode in a charged state in the negative electrode) or a sulfide-based solid electrolyte, hydrogen sulfide gas is generated by contact with moisture.

Further, a general solid electrolyte is a powdery material having no fluidity, and has a property of being rich in reaction with moisture. In particular, a sulfur-based solid electrolyte containing sulfur as a main component generates hydrogen sulfide gas when coming into contact with moisture, and reduces ionic conductivity. Hydrogen sulfide gas ($H_2S$) is a colorless flammable gas having a rotten egg odor. Hydrogen sulfide gas is a gas having toxicity to the human body, which stimulates eyes, skin, and mucous membranes.

When the concentration of hydrogen sulfide in the air is 1 ppm or more, a slight odor is observed. When the concentration is 3 ppm or more, the odor is significant. When the concentration is 5 ppm or more, an extremely unpleasant odor is felt. When the concentration is 10 ppm or more, hydrogen sulfide poisoning may occur. As the concentration of hydrogen sulfide gas and the exposure time increase, the life risks are pointed out.

Therefore, in a power storage device including a sulfide inside a cell, for example, a secondary battery or an ion capacitor including a sulfur-based electrode or a sulfide-based solid electrolyte, there is a possibility that the sulfide comes into contact with moisture in the air to generate hydrogen sulfide gas when the power storage device is damaged. Thus, a technique for suppressing generation of hydrogen sulfide gas as much as possible is required. As a countermeasure, a method for trapping and detoxifying hydrogen sulfide gas has been proposed.

For example, Patent Literature 10 proposes a sulfide-based secondary battery containing a sulfur compound that generates hydrogen sulfide gas by decomposition therein, wherein the outer peripheral portion of the battery cell is covered with a substance that traps and detoxifies hydrogen sulfide gas.

If the sulfur-based material is not subjected to a pre-doping treatment in advance before assembling the battery, the battery capacity is extremely lowered. In light of this, various pre-doping methods have been proposed in order to supplement lithium in advance.

For example, as described in Patent Literature 11 and Non Patent Literature 5, there are known methods such as an electrochemical method, an alkali metal bonding method, and a mechanical method.

Citation List

Patent Literature

Patent Literature 1: US 4833048 B
Patent Literature 2: JP 2018-065980 A
Patent Literature 3: JP 2002-154815 A
Patent Literature 4: JP 2003-123758 A
Patent Literature 5: WO 2010/044437 A
Patent Literature 6: JP 2018-085291 A
Patent Literature 7: JP 2002-164084 A
Patent Literature 8: JP 2013-196878 A
Patent Literature 9: WO 2015/030053 A
Patent Literature 10: JP 2008-103245 A
Patent Literature 11: JP 2015-088437 A

Non Patent Literature

Non Patent Literature 1: "The Latest Technological Trend of Rare Metal-Free Secondary Batteries", Takuhiro Miyuki, Toshikatsu Kojima, Tetsuo Sakai, CMC Publishing Co., Ltd., pp. 81 to 101 (2013)
Non Patent Literature 2: Tetsuo Sakai, Takuhiro Miyuki, Takashi Mukai: Battery Technology, 25, pp. 65 to 74 (2013)
Non Patent Literature 3: Tatsuya Kubo: Industrial Material, 63 (12), pp. 35 to 38 (2015)
Non Patent Literature 4: Akitoshi Hayashi, Takamasa Ohtomo, Fuminori Mizuno, Kiyoharu Tadanaga, Masahiro Tatsumisago: Electrochemistry Communications, 5(8), pp. 701 to 705 (2003)
Non Patent Literature 5: Taichi Sakamoto, Takuhiro Miyuki, Tetsuo Sakai: "Collection of Measurement and Analysis Data of Lithium Secondary Battery Members" Technical Information Institute Co. Ltd, Chapter 3, Section 30, pp. 200 to 205 (2012)

Summary of Invention

Technical Problem

In the sulfur-based materials disclosed in Patent Literatures 1 to 6 and Non Patent Literatures 1 to 3, by combining or modifying sulfur with carbon, an organic substance, or the like, excellent cycle characteristics can be obtained as compared with an electrode using elemental sulfur. In the batteries disclosed in Patent Literatures 7 and 8, cycle characteristics are improved as compared with a battery using an electrolytic solution, by using an electrolyte from which lithium polysulfide is hardly eluted. However, in these literatures, although studies have been made to improve the characteristics of the electrode and the battery, an assumption is not made that the sulfide comes into contact with moisture in the air when the battery is damaged.

In Patent Literature 9, hydrogen sulfide gas can be trapped by covering the outer peripheral portion of the battery cell with a substance that traps and detoxifies hydrogen sulfide gas. However, the fact that the detoxifying substance covers the outer peripheral portion of the battery cell greatly leads to reduction in the volume energy density of the battery.

Incidentally, in the current temperature management of batteries, a method of exchanging heat with gas or liquid through an exterior portion of the battery (so-called air cooling method or water cooling method) is adopted. When the outer peripheral portion of the battery cell is covered with a substance having poor heat conduction, heat cannot be efficiently transferred to the battery. As a matter of course, when the thickness and porosity of the substance to be covered increase, the thermal conductivity of the battery is lost. Since heat is more easily conducted through a substance having a stronger intermolecular force, the thermal conductivity increases in the order of gas, liquid, and solid.

The detoxifying substance in Patent Literature 9 can be exemplified by an alkaline substance, and can be used as an aqueous solution, a slurry, a gel, or a powder. Among them, from the viewpoint of enhancing the heat exchangeability of the battery, it can be said that the powder has the highest molecular vibration and high thermal conductivity. However, the powder, which contains voids therein, has low thermal conductivity. Even when an alkaline substance and a resin are mixed and used as a molded sheet product, the sheet product includes voids, and the resin itself is a substance having low thermal conductivity.

In this configuration, a moisture-proof multilayer film composed of a metal foil layer for enhancing airtightness and a resin layer for maintaining strength is required as an exterior body of a power storage device. Such a configuration is not suitable for a power storage device composed of a hard case, such as a cylindrical battery or a square battery.

Therefore, the inventors of the present application have repeatedly studied a power storage device using a sulfur-based material, the power storage device suppressing generation of hydrogen sulfide gas when a sulfur-based material and moisture come into contact with each other without impairing volume energy density and thermal conductivity of the power storage device.

Solution to Problem

In order to achieve the above object, an electrode used in a non-aqueous electrolyte power storage device according to one aspect of the present invention is an electrode used in a non-aqueous electrolyte power storage device containing a sulfur-based material that generates hydrogen sulfide gas by contact with moisture in a cell, the non-aqueous electrolyte power storage device including a positive electrode, a negative electrode, and an electrolyte, the sulfur-based material being contained in at least any of the positive electrode, the negative electrode, and the electrolyte, the electrode comprising:

a current collector;
an electrode active material layer; and
a coating material, wherein
the coating material has at least one of a silicate containing a siloxane bond as a component and/or a silica fine particle aggregate containing a siloxane bond as a component,
the silicate containing a siloxane bond or the silica fine particle aggregate containing a siloxane bond has a silanol group,
the coating material is present on at least a surface of the electrode active material layer, and
the electrode active material layer contains an active material capable of being alloyed with a metal element identical to an ion species responsible for electrical conduction or an electrode active material capable of absorbing ions responsible for electrical conduction, and a resin-based binder. In addition, a non-aqueous electrolyte power storage device according to one aspect of the present invention includes the electrode.

A method for producing a non-aqueous electrolyte power storage device according to one aspect of the present invention is a method for producing a non-aqueous electrolyte power storage device containing a sulfur-based material that generates hydrogen sulfide gas by contact with moisture in an electrode or an electrolyte, the method including: an electrode production step including:

a step A of mixing an active material capable of being alloyed with a metal element identical to an ion species responsible for electrical conduction or an active material capable of absorbing ions responsible for electrical conduction, a binder, and a solvent to form a slurry;
a step B of applying or filling the slurry to a current collector having a predetermined shape to form an active material layer; and
a step C of applying a coating material containing at least one of an aqueous silicate solution having a silanol group or a silica fine particle dispersion having a silanol group to the active material layer; and
an assembly step of combining the electrode and the electrolyte.

According to this configuration, it is possible to produce a non-aqueous electrolyte power storage device in which the coating material functions as a barrier material (protective film) for preventing moisture entering from the outside. Here, the non-aqueous electrolyte power storage device includes a non-aqueous electrolyte battery and capacitor. In addition, the electrode produced by the electrode production step includes a positive electrode and a negative electrode. In addition, the negative electrode or the positive electrode produced by the electrode production step and a conventional positive electrode or negative electrode may be combined to form a non-aqueous electrolyte power storage device, or the negative electrode and the positive electrode produced by the electrode production step may be combined to form a non-aqueous electrolyte power storage device.

The coating material may contain both a silicate containing a siloxane bond as a component and a silica fine particle aggregate containing a siloxane bond as a component. From the viewpoint of increasing the strength of the electrode, the coating material preferably contains a silicate in a larger amount than silica. According to this configuration, the coating material functions as a barrier material (protective film) for preventing moisture entering from the outside.

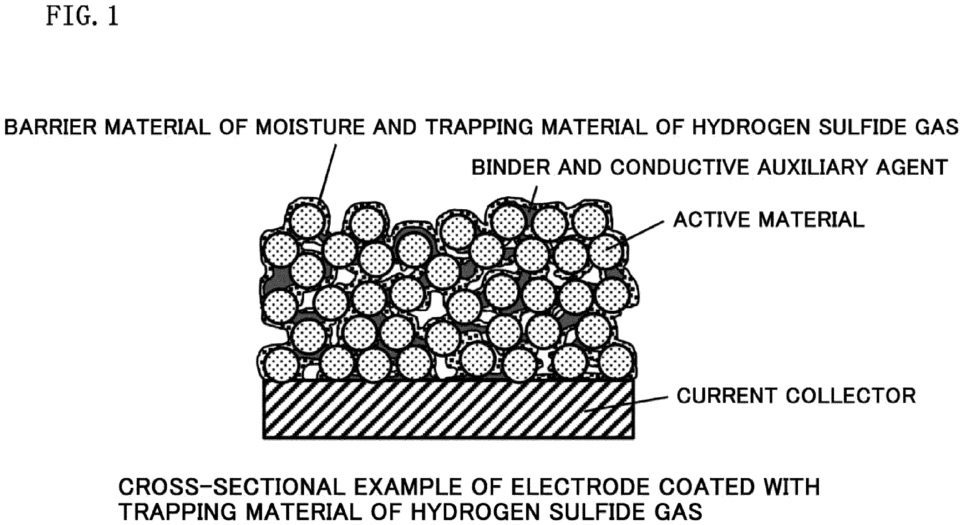

For example, in a power storage device using an electrode containing a sulfur-based material (sulfur-based electrode), the coating material prevents direct contact with the sulfur-based material contained in the active material layer. In this case, an electrode cross section as exemplified in FIG. 1 is obtained. The coating material is present on at least the surface of the negative electrode active material layer by being applied to the active material layer of the electrode and dried. This coating material suppresses elution of lithium polysulfide generated from the active material into the electrolytic solution.

Although the sulfur-based active material does not change in volume as much as silicon (Si) or tin (Sn), the sulfur-based active material expands and contracts by charging and discharging, and thus the coating material is required to have a certain degree of binding property. When the binding property between the coating material and the active material layer is weak, peeling or cracking may occur in the coating material due to a volume change in the active material. The exposed active material comes into contact with the electrolytic solution to cause lithium polysulfide to elute, and the electric capacity of the electrode is reduced. Also, the presence of the exposed active material causes generation of hydrogen sulfide gas when moisture intrudes from the outside.

Therefore, the coating material preferably contains any one of a silicate containing a siloxane bond as a component and a silica fine particle aggregate containing a siloxane bond as a component, which are capable of strongly adhering to the surface of the active material or the active material layer.

In addition, in the silicate or the silica fine particle aggregate, a silanol group can be imparted. When moisture enters from the outside, the coating material having a silanol group takes in moisture to generate an alkaline aqueous solution having a pH value of 9 or more in the coating material.

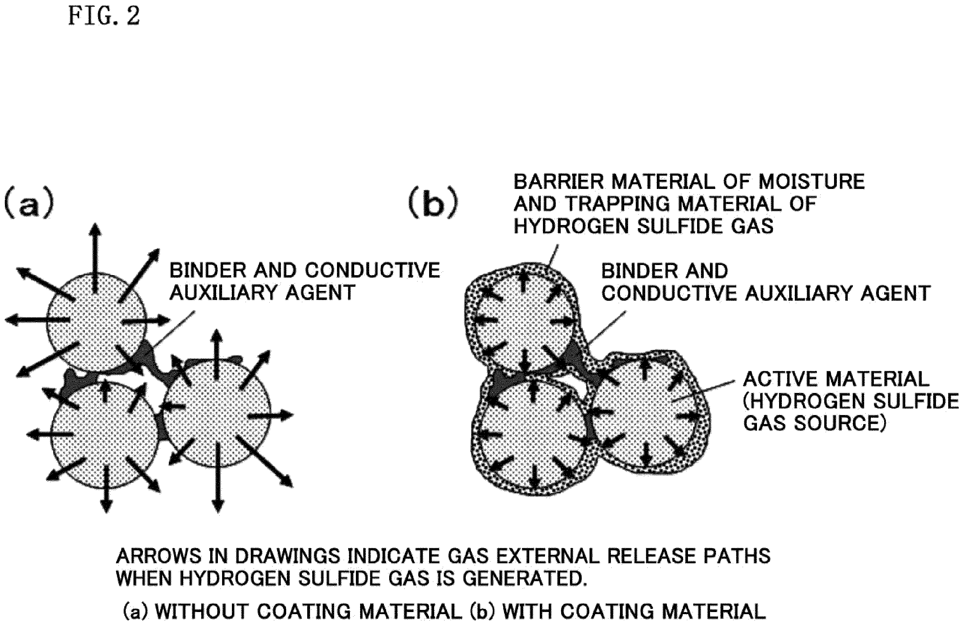

A sulfide of an alkali metal is normally hydrolyzed when brought into contact with water to generate hydrogen sulfide gas. However, in an electrode used in a power storage device having this configuration, even if the sulfide contained in the electrode Is supplied with moisture supplied from a film of an alkaline aqueous solution to generate hydrogen sulfide gas, the hydrogen sulfide gas is encapsulated in a coating material. Therefore, as shown in FIG. 2, hydrogen sulfide gas needs to pass through the coating material in order to be released to the outside of the cell. The alkaline aqueous solution is an excellent trapping material for hydrogen sulfide gas. The alkaline aqueous solution dissolves and neutralizes the hydrogen sulfide gas, and thus has an effect of preventing gas release to the outside of the battery.

In addition, in the case of a power storage device in which an electrode containing no sulfur-based material as the active material is used in the electrode according to the present invention and an electrode containing a sulfur-based material (sulfur-based electrode) or a sulfur-based solid electrolyte is used in the other electrode, a sulfide cannot be encapsulated in the coating material, but when moisture enters from the outside, the coating material having a silanol group present on the surface of the active material takes in moisture to generate an alkaline aqueous solution having a pH value of 9 or more in the coating material.

In the above power storage device, even if moisture is supplied to an electrode containing a sulfur-based material or a sulfur-based solid electrolyte, and hydrogen sulfide gas is generated, a coating material for trapping the hydrogen sulfide gas is present in the vicinity of a hydrogen sulfide gas generating medium (see, FIGS. 3 and 4). Therefore, the hydrogen sulfide gas comes into contact with the coating material. Further, a coating material may be provided not only in one electrode but also in the other electrode to trap hydrogen sulfide gas (see, FIG. 5).

That is, this power storage device has a structure in which the coating material of the electrode comes into contact with hydrogen sulfide gas when the sulfur-based electrode or the sulfur-based solid electrolyte comes into contact with moisture, and has an effect of reducing the amount of hydrogen sulfide gas released to the outside of the cell. In other words, in the power storage device of the present invention, a coating material for trapping hydrogen sulfide gas is present in the vicinity of a hydrogen sulfide gas generating medium.

In particular, a power storage device using an electrode containing a sulfur-based material has the following configuration: when the electrode comes into contact with moisture, the coating material of the electrode suppresses contact between the sulfur-based material and moisture; and the middle of a path through which hydrogen sulfide gas is released to the outside of the cell is always blocked by the trapping material. Thus, the power storage device has an effect of further reducing the amount of hydrogen sulfide gas released to the outside of the cell.

The silanol group is a functional group represented by the chemical formula - Si-OH in which a hydroxy group (-OH) is bonded to silicon. As the material having a silanol group, there are various silicon compounds such as silyl alcohol, a silicone resin, and a silanol-modified organic material. In the present invention, the coating material is characterized by being a silicate containing a siloxane bond as a component or a silica fine particle aggregate containing a siloxane bond as a component. The reason why the coating material contains a siloxane bond (Si-O-Si) as a component is that there is an effect of forming a silanol group when the siloxane bond is hydrolyzed.

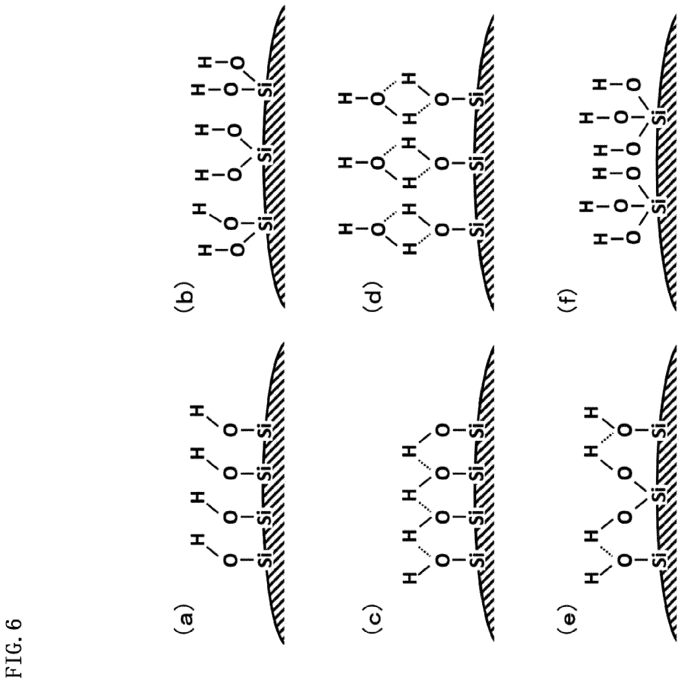

For example, silanol groups are present in various forms as shown in FIG. 6. Incidentally, silanol groups may be confined in pores of the coating material. The pores contained in the silicate or silica fine particles can also be expected to have an effect such as physical adsorption of hydrogen sulfide gas by the pores. The size of the pore is preferably 0.1 nm or more and 1,000 nm or less, and more preferably 0.5 nm or more and 500 nm or less, in terms of its diameter or width.

The action mechanism by which the coating material having a silanol group traps hydrogen sulfide gas is complicated, and various action mechanisms are expected depending on the type and moisture amount of the coating material. Although it is not clear, adsorption via chemical bonding by the silanol group, dissolution and neutralization reaction due to adsorption water of the coating material, physical adsorption by pores, and the like are considered to act in combination.

The siloxane bond contained in the coating material is hydrolyzed by moisture in the battery or moisture supplied from outside the cell to form a silanol group. It is considered that this silanol group undergoes a dehydration reaction with hydrogen sulfide gas to form a chemical bond.

The silicate undergoes a dehydration condensation reaction of a silanol group by heat treatment to be cured while forming a siloxane bond. The cured silicate changes its siloxane structure to a silanol structure upon contact with water. Although it depends on the conditions of forming a siloxane bond, the siloxane structure is usually less likely to change to a silanol structure as the temperature of the heat treatment increases. That is, the siloxane structure formed at a low temperature is relatively easily changed to a silanol structure when brought into contact with water.

In addition to the silicate, examples of the inorganic material containing a siloxane bond include a silica sol (colloidal silica). The silica sol is a colloidal solution in which silica (silicon oxide) fine particles are dispersed in water. The particle size of the silica dispersed in the liquid is 1 nm or more and 500 nm or less, and a hydroxyl group or a silanol group is present on the surface thereof. The silica sol becomes an aggregate of silica fine particles by drying. The aggregate refers to an agglomerate formed from fine particles dispersed in a liquid. Silica fine particles obtained from a silica sol form a siloxane bond via dehydration condensation reaction by heat treatment similarly to the silicate, and the siloxane bond is formed inside particles of the oxide.

However, since the sol is less likely to continuously contract during drying, the coating film having cracks adheres to the active material layer. For this reason, when the silicate is compared with the silica sol, the silicate is preferable. The silicate can suppress the elution amount of lithium polysulfide into the electrolytic solution, and achieve high capacity and long life of the battery. In addition, an aqueous solution in which the silicate is dissolved exhibits strong alkalinity (pH 10 or higher), but does not react exceptionally with aluminum, so that aluminum (Al) or an aluminum alloy can be used for the current collector.

However, the silicate, which is not dissolved in an organic solvent, becomes a water-based (aqueous) coating material. On the other hand, the silica sol has an advantage of being capable of dispersing a nano-level silica sol in an organic solvent in addition to water.

The colloidal solution in which silica fine particles are dispersed in an organic solvent is also called an organosilica sol. Silica fine particles can be dispersed in various organic solvents such as alcohol, ketone, ether, aldehyde, amine, ester, lactone, terpene, thiol, toluene, xylene, and N-methyl-2-pyrrolidone (NMP). It is therefore possible to develop a combination with a material that reacts in contact with water, a combination with a resin that cannot be dissolved with water, and the like.

The silicate containing a siloxane bond as a component may be an alkali metal silicate, a silicate of a guanidine compound, or a silicate of an ammonium compound.

There are many types of such silicates, for example, polysilicates such as orthosilicate ($A_4SiO_4$), metasilicate ($A_2SiO_3$), pyrosilicate ($A_6Si_2O_7$), disilicate ($A_2Si_2O_5$), and tetrasilicate ($A_2Si_4O_9$), and $A_2Si_2O_5$, $A_2Si_3O_7$, and $A_2Si_4O_9$ (A is alkali metal element or a guanidine group, a triethanolammonium group, or a tetramethanolammonium group), and these silicates may be hydrates.

In general, as the proportion of A in the silicate increases, the melting point of the silicate tends to decrease, and at the same time, the silicate exhibits solubility in water. Industrially, for the silicate, the proportion of A in the silicate can be continuously changed, and any salt can be adjusted. The general molecular formula of the silicate is represented by the formula of $A_2O \cdot nSiO_2$.

A is an alkali metal element (Li, Na, K, Rb, Cs) or at least one of a guanidine group, a triethanolammonium group, and a tetramethanolammonium group, and n is 0.5 or more and 5.0 or less.

Preferably, A in the general formula of the silicate is Li, Na, or K. When these alkali metal elements are brought into contact with water, a siloxane structure is easily changed to a silanol structure. In particular, in the case of Li, a siloxane structure is easily changed to a silanol structure, and a coating material having high ionic conductivity is obtained, so that the input-output characteristics of the battery are excellent. Na or K is excellent in the mechanical strength of the coating material, the binding property with the active material, and the wear resistance of the electrode.

Preferably, n in the general formula of the silicate is 0.7 or more and 3.5 or less, and more preferably 0.8 or more and 3.0 or less. When the number n of $SiO_2$ is more than 5.0, the trapping property of hydrogen sulfide gas is lowered. In such a case, the binding property with the active material layer is poor, and peeling and cracking are remarkably likely to occur due to a volume change in the electrode during charging and discharging or external factors such as a nail penetration test.

On the other hand, when n is less than 0.5, since the viscosity of the coating material is high, it is difficult for the coating material to penetrate or be applied to the electrode active material layer.

In a case of using a silicate where A is an alkali element, and using a sulfur-based material as an active material, when this silicate is applied to the active material layer, an alkali metal sulfate is generated between the active material and the coating material.

Hydrogen sulfide gas exhibits weak acidity when dissolved in water ($H_2S \leftrightarrow HS^- + H^+$). When the coating material is in an alkaline region, hydrogen sulfide ions ($HS^-$) hardly become hydrogen sulfide gas, but hydrogen sulfide gas tends to be generated as the coating material has a low pH and shifts to an acidic region.

Sulfate radicals remain in the sulfur-based material except for elemental sulfur. For this reason, the sulfur-based material before lithiation exhibits strong acidity (pH 3 or lower) when comes into contact with water. The alkali metal silicate and sulfate radicals contained in the sulfur-based material generate an alkali metal sulfate as in the following reaction scheme.

$$A_2O \cdot nSiO_2 + 2H^+ + SO_4^- \rightarrow nSiO_2 + A_2SO_4 + H_2O$$

Apart of the Si site in the silicic acid compound may be substituted with a transition metal element such as Al, Zr, Ti, Mg, Mo, Sr, Ca, Zn, Ba, B, W, Ta, Ce, Hf, or Y

In addition, these structures can be roughly classified into crystallinity and non-crystallinity, but are preferably amorphous because a siloxane structure is likely to change to a silanol structure when brought into contact with water. In the case of being amorphous, cracking in a specific direction does not occur as in the case of crystals, and thus hydrogen sulfide gas can be more effectively trapped. In addition, resistance to hydrofluoric acid is improved, so that the breakdown of the electrode derived from hydrofluoric acid is less likely to occur. Moreover, in a power storage device using a positive electrode (sulfur-based positive electrode) containing a sulfur-based material or a sulfur-based solid electrolyte without using a negative electrode containing a sulfur-based material, there is an effect of improving cycle characteristics of the negative electrode.

An amorphous solid consists of a random molecular arrangement and does not have a distinguishable crystal lattice. The solubility of the amorphous solid is higher than that of the crystalline form, and does not have a certain melting point. Therefore, the absence of a clear peak in a powder X-ray diffraction (XRD) pattern and the absence of a melting endothermic peak in a differential thermal analysis (DTA) curve or a differential scanning calorimetry (DSC) curve indicate an amorphous form.

That is, the amorphous silicate or silica fine particle aggregate does not have a sharp peak, which is a feature of a crystalline form in XRD, and exhibits a broad peak, a so-called halo pattern, typical of a diffraction angle (2θ) within a range of 15° to 40° by Cu-Kα rays.

However, even if the halo pattern is obtained in XRD, not all the halo patterns are amorphous. Only a case satisfying conditions under which the crystal grain is less than 5 nm according to the Scherrer equation shown in Equation 1 is considered to be amorphous. That is, when the crystal grain is 5 nm or more, the diffraction line is wide, and a pattern similar to that of the amorphous form is not obtained.

$$D(\text{Å}) = 0.9\lambda/(\beta \times \cos\theta) \ldots \text{(Equation 1)}$$

(where D represents the size of the crystal grain, λ represents the wavelength of the X-ray tube, β represents the spread of the diffraction line based on the size of the crystal grain, and θ represents the diffraction angle)

When the amorphous state changes to the crystalline state, large heat generation occurs. Thus, it is also possible to determine the crystalline state of the silicate or the silica fine particle aggregate by measuring the heat generation.

In the silicate, although it varies depending on the environment and time of the heat treatment, an amorphous silicate can be obtained by heat-treating the electrode at a temperature of 80°C or higher and 600°C or lower at a temperature raising rate of 10°C/h or higher.

The same applies to the silica sol, but in the silicate, the amount of silanol groups in the silicate tends to decrease as the temperature of the heat treatment increases. In the present invention, since the silanol group is an essential component for the reaction with hydrogen sulfide gas, the amount of silanol group in the coating material is preferably 100 ppm or more, more preferably 200 ppm or more, and still more preferably 300 ppm. Therefore, the upper limit of the temperature of the heat treatment is preferably 350°C or lower, more preferably 250°C or lower, and still more preferably 180°C or lower.

The amount of the silanol group can be quantified from attribution of a spectrum obtained by dipolar decoupling and/or magic angle rotation method in Si-NMR measurement.

The coating material preferably further contains a surfactant. The content of the surfactant may be 0.001 mass% or more and 5.0 mass% or less. When the coating material contains a surfactant, the lyophilicity of the coating material to the electrode active material layer is improved, so that the coating material uniformly penetrates into the active material layer. Therefore, a uniform coating material is formed in the electrode active material layer, and the property of trapping hydrogen sulfide gas is further improved. When the content of the sulfur component is large, the sulfur-based material tends to exhibit water repellency. When the content of the surfactant is less than 0.001 mass%, the coating material may be difficult to penetrate into such an active material layer. When the content of the surfactant is more than 5 mass%, a defoaming agent is required. When there is no defoaming agent in such a case, the surface of the active material layer is foamed, causing variation in the electrode performance.

As the surfactant, a non-ionic surfactant, an anionic surfactant, a cationic surfactant, an amphoteric surfactant, a nonionic surfactant, or the like may be used.

The coating material preferably further contains a metal salt of at least one transition metal element selected from Mn, Mg, Ca, Fe, Co, Ni, Cu, Zn, Al, Ba, and Cu. The coating material containing metal salts of these transition metal elements can trap hydrogen sulfide gas more effectively. More preferred are Mn, Fe, Co, Ni, Cu, Zn, and Al. As the metal salt, inorganic salts such as sulfuric acid, hydrochloric acid, nitric acid, and phosphoric acid, or organic salts such as formic acid, acetic acid, and oxalic acid can be used. In addition, the metal salt is preferably a phosphate from the viewpoint of improving the water resistance of the coating material. When the water resistance of the coating material is low, the coating material may disappear due to contact with water, and as a result, the trapping function may be deteriorated.

In the metal salt, the content of the transition metal element is preferably 1 mol% or more and 80 mol% or less, more preferably 10 mol% or more and 70 mol% or less, and desirably 20 mol% or more and 60 mol% or less, when the total amount of the transition metal element and the silicon element in the silicate is 100 mol%. When the content of the transition metal element is less than 1 mol%, the effect of trapping hydrogen sulfide gas is not remarkably exhibited. As the amount of the transition metal elements increases, the effect of trapping hydrogen sulfide gas tends to increase, but when the amount of transition metal elements exceeds 80 mol%, the trapping ability conversely decreases.

The coating material preferably further contains at least one of $A_2CO_3$ or $AHCO_3$ (A is at least one alkali metal element selected from Li, Na, K, Rb, and Cs). A carbonic acid compound or a hydrogen carbonate compound of these alkali metal elements has low solubility in water, but an aqueous solution thereof exhibits alkalinity, so that hydrogen sulfide gas can be more effectively trapped.

The content of $A_2CO_3$ or $AHCO_3$ may be 1 mass% or more and 50 mass% or less with respect to the coating material.

The coating material may be a silicate mixed with a powder of $A_2CO_3$ or $AHCO_3$, but it is preferable that a silicate is allowed to absorb a carbonate source to produce $A_2CO_3$ or $AHCO_3$, from the viewpoint of greatly improving the water resistance of the coating material. When the water resistance of the coating material is low, the coating material may disappear due to contact with water, and as a result, the trapping function may be deteriorated.

The carbonic acid source may be any material that reacts with silicic acid to produce $A_2CO_3$ or $AHCO_3$. Examples thereof include carbon dioxide gas, liquefied carbon dioxide, dry ice (solid carbon dioxide), carbon oxides such as carbon monoxide, carbonic acid compounds such as calcium carbonate and magnesium carbonate, and hydrogencarbonates such as sodium hydrogen carbonate and calcium hydrogen carbonate. Among them, carbon dioxide gas is preferable.

The concentration of the carbon dioxide gas is preferably high, and a mixed gas containing at least 1 mass% or more, preferably 5 mass% or more of carbon dioxide gas may be used. Examples of the mixed gas include mixed gases of carbon dioxide gas and a gas such as atmospheric air, water vapor, nitrogen, hydrogen, rare gas (helium, neon, argon, krypton, and the like), hydrocarbon (methane, ethane, butane, propane, and the like), chalcogen (sulfur, oxygen, selenium, and the like), halogen (fluorine, chlorine, bromine, iodine, and the like).

As a method for causing a silicate to absorb a carbonic acid source, for example, an electrode coated with a coating material may be left in a carbon dioxide gas atmosphere. At this time, the carbon dioxide gas atmosphere is preferably a pressurized gas environment having an absolute pressure of 0.12 MPa or more and 100 MPa or less (1.18 atm or more and 987 atm or less). The pressure is more preferably 0.14 MPa or more and 80 MPa or less, still more preferably 0.16 MPa or more and 60 MPa or less, and desirably 0.18 MPa or more and 50 MPa or less. In such a pressurized gas environment, the carbonic acid source can be uniformly and quickly absorbed into the silicate to be reacted.

In addition, as a method for causing a silicate to absorb a carbonic acid source, for example, absorption can be made by bringing liquefied carbon dioxide or dry ice (solid carbon dioxide) into contact with an electrode and leaving the electrode to stand, or performing firing in a state in which a hydrogencarbonate is in contact with a coating material.

The coating material may further contain carbon. When the coating material contains carbon, electron conductivity can be imparted to the coating material. The amount of carbon contained in the coating material may be 0.1 mass% or more and 70 mass% or less when the total of the coating material and carbon is 100 mass%. As the carbon, the same material as the conductive auxiliary agent of the electrode can be used.

As a method for improving the electron conductivity of the active material, there is a method in which carbon is supported on the surface of the active material by heat-treating a hydrocarbon gas or the like as a carbon precursor together with the active material. However, when the active material is a sulfur-based material, even in the sulfur-based material having excellent heat resistance (sulfur-modified polyacrylonitrile) described in Non Patent Literature 1, there is a problem that the sulfur component in the active material becomes a hydrogen sulfide gas due to hydrocarbon gas acting as a reducing agent, and the sulfur component in the active material decreases.

In addition, there is a method in which the active material and carbon are composited by a mechanical pulverization treatment such as ball milling, a jet mill, or a grinding machine. However, when the active material is a sulfur-based material, there is a problem that when an external force such as impact, tension, friction, compression, or shear is applied to the sulfur-based material through mechanical pulverization treatment, the sulfur-based material is disintegrated due to pulverization or distortion, and a sulfur component, which is easily dissolved in a slurry solvent or an electrolytic solution solvent, is exposed.

As described above, in order to improve the electron conductivity in the active material layer, it is preferable to use a material carbonized in advance (carbon) instead of carbon coating by thermal decomposition of the carbon precursor, and it is preferable not to apply a mechanical external force to the sulfur-based material at the same time. That is, these problems can be solved by coating the active material layer with the coating material containing carbon.

A non-aqueous electrolyte power storage device according to one aspect of the present invention is a non-aqueous electrolyte battery or a non-aqueous electrolyte ion capacitor, and is a battery or a capacitor using a non-aqueous electrolyte such as an organic solvent as an electrolyte. The non-aqueous electrolyte power storage device includes a sodium ion battery, a potassium ion battery, a magnesium ion battery, a calcium ion battery, a lithium ion capacitor, a sodium ion capacitor, a potassium ion capacitor, and the like in addition to a lithium ion battery.

In addition, the lithium ion battery is a non-aqueous electrolyte battery which electrolyzes an organic solvent and does not contain water as a main component, and means a battery in which lithium ions are contained in ions responsible for electrical conduction. For example, a lithium ion battery, a metal lithium battery, a lithium polymer battery, an all-solid lithium battery, an air lithium ion battery, and the like are applicable, and a primary battery or a secondary battery (storage battery) may be applicable. Other power storage devices are similarly applicable.

Here, the non-aqueous electrolyte containing no water as a main component means that the main component in the electrolyte is not water. That is, the electrolyte is a known electrolyte used for a non-aqueous electrolyte power storage device. Even when the electrolyte contains some water, the power storage device can function, but such an electrolyte has an adverse effect on cycle characteristics, storage characteristics, and input-output characteristics of the power storage device. Thus, it is desirable that the electrolyte does not contain water as much as possible. Practically, the concentration of water in the electrolyte is preferably 5,000 ppm or less, more preferably 1,000 ppm or less, and desirably 100 ppm or less.

The electrode used for these power storage devices includes a positive electrode and a negative electrode. Many sulfur-based materials (sulfur-based active materials) have a charge-discharge voltage of 1 V or more and 3 V or less (vs. Li/Li$^+$), and thus can be used for both the positive electrode and the negative electrode. Examples of the sulfur-based material include elemental sulfur, carbon disulfide, polysulfide, carbon polysulfide, sulfur-modified polyacrylonitrile, disulfide compounds, sulfur-modified rubber, sulfur-modified pitch, sulfur-modified anthracene, sulfur-modified ethylene glycol, and metal sulfide. These sulfur-based materials are solid materials that decompose when brought into contact with water during lithiation to generate hydrogen sulfide gas. The elemental sulfur is not particularly limited, and $\alpha$-type sulfur, $\beta$-type sulfur, and $\gamma$-type sulfur having a S8 structure can be used.

The sulfur-based material is preferably a sulfur-based material having a sulfur content of 10 mass% or more and 90 mass% or less, a carbon content of 10 mass% or more and 90 mass% or less, and a hydrogen content of 0 mass% or more and 10 mass% or less, rather than elemental sulfur or metal sulfide, from the viewpoint that lithium polysulfide is less likely to be eluted into the electrolytic solution and the electronic conductivity of the material is excellent. Examples thereof include carbon disulfide, polysulfide, carbon polysulfide, sulfur-modified polyacrylonitrile, disulfide compounds, sulfur-modified rubber, sulfur-modified pitch, and sulfur-modified anthracene. The elemental analysis method may be any analysis method that enables general evaluation of quantification of sulfur, carbon, and the like. For example, the content of sulfur in the sulfur-modified organic compound can be calculated by performing elemental analysis using a CHN analyzer (vario MICRO cube, manufactured by Elementar Analysensysteme GmbH) capable of analyzing sulfur and oxygen.

From the viewpoint of excellent electric capacity and cycle characteristics of the electrode, the sulfur-based material is more preferably sulfur-modified polyacrylonitrile having a sulfur content of 10 mass% or more and 80 mass% or less, a carbon content of 20 mass% or more and 90 mass% or less, a hydrogen content of 0 mass% or more and 10 mass% or less, and a nitrogen content of 5 mass% or more and 30 mass% or less from the result of elemental analysis.

In addition, the sulfur-based materials described above may be used alone, may be used in combination of two or more thereof, or may be used in combination with a positive electrode active material or a negative electrode active material described later.

When the sulfur-based material is used as the positive electrode active material, the battery capacity is extremely lowered or the battery does not operate unless the lithium doping treatment is performed in advance before assembling the battery or the lithium doping treatment is performed on the negative electrode. Therefore, it is preferable to perform lithium doping treatment on one or both electrodes.

As a method of lithium doping, known methods such as an electrochemical method, an alkali metal bonding method, and a mechanical method can be used as described in Patent Literature10 and Non Patent Literature 4.

In the case of a sodium ion battery, a potassium ion battery, a sodium ion capacitor, a potassium ion capacitor, or the like, doping may be performed with the same metal as ions responsible for electrical conduction.

The shape of the active material particles of the sulfur-based material is not particularly limited, and may be spherical, elliptical, faceted, band-shaped, fibrous, flaky, donut-shaped, or hollow. In addition, the sulfur-based material may contain a compound that decomposes into a solid electrolyte in the process of initial charge or discharge.

The solid electrolyte obtained in the process of initial charge or discharge is not particularly limited as long as it is a substance having ionic conductivity. For example, in a lithium ion battery or a lithium ion capacitor, a solid electrolyte represented by Li$\alpha$X$\beta$$\gamma$ is preferable. In the above formula, $0 < \alpha < 4$, $0 \leq \beta \leq 2$, and $0 \leq \gamma \leq 5$ are satisfied. The solid electrolyte also serves as a buffer material of a material capable of reversibly absorbing and desorbing lithium ions.

In the case of a sodium ion battery, a potassium ion battery, a sodium ion capacitor, a potassium ion capacitor, or the like, the solid electrolyte is a metal element same as ions responsible for electrical conduction.

X is, for example, one or more of Si, Ti, Mg, Ca, Al, V, Ge, Zr, Mo, and Ni, and Y is one or more of O, S, F, Cl, Br, I, P, $B_2O_3$, $C_2O_4$, CO3, $PO_4$, S, $CF_3SO_3$, and $SO_3$. More specific examples include LiF, LiCl, LiBr, LiI, $Li_3N$, LiPON, $Li_2C_2O_4$, $Li_2CO_3$, $LiAlCl_4$, $Li_2O$, $Li_2S$, $LiSO_4$, $Li_2SO_4$, $Li_3PO_4$, $Li_3VO_4$, $Li_4GeO_4$, $Li_2Si_2O_5$, $Li_2SiO_3$, $Li_4SiO_4$, $Li_4ZrO_4$, $LiMoO_4$, $LiAlF_4$, $Li_3Ni_2$, $LiBF_4$, and $LiCF_3SO_3$, and one or two or more of these can be used.

Examples of the substance capable of absorbing and desorbing alkali metal ions and the compound that decomposes into the solid electrolyte include $SiO$, $GeO$, $GeS$, $GeS_2$, $SnO$, $SnO_2$, $SnC_2O_4$, $SnO-P_2O_5$, $SnO-B_2O_3$, $SnS$, $SnS_2$, $Sb_2S_3$, $SnF_2$, $SnCl_2$, $SnI_2$, and $SnI_4$, and two or more of these may be used.

Regarding the particle size of the active material, when an active material powder having a small particle size is used, disintegration of the particles is reduced, and the life characteristics of the electrode tends to be improved. Also, the specific surface area also tends to increase, and the output characteristics tend to be improved. For example, a non patent literature (The Latest Technological Trend of Rare Metal-Free Secondary Batteries, chapter 3, section 1, subsection 4, pp. 125 to 135, CMC Publishing Co., Ltd., 2013) describes that when the particle size of the active material decreases, the initial discharge capacity increases, and the cycle life is also improved. This reveals that the particle size of the active material correlates with the initial charge-discharge efficiency and the cycle life.

However, the active material at a nano order level is difficult to handle, and thus is preferably granulated for use. For example, JP 5525003 B discloses a negative electrode using a nano-granulated body using a granulation binder of any one or more of polyimide, polybenzimidazole, styrene-butadiene rubber, polyvinylidene fluoride, carboxymethyl cellulose, and polyacrylic acid. However, the sulfur-based material does not change in volume as much as the Si-based material and the Sn-based material. In the sulfur-based material, as the particle size of the active material decreases, the contact area with the electrolytic solution increases, so that lithium polysulfide is easily eluted. Such elution reduces electric capacity and deteriorates cycle characteristics.

When the coating material containing a silanol group is used as the granulation binder of the active material described above, the coating material can suppress elution of lithium polysulfide. In that case, the primary particles of the active material preferably have a median diameter (Dso) of 0.01 $\mu m$ or more and 20 $\mu m$ or less, and the active material particles (secondary particles) after granulation preferably have a median diameter (Dso) of 0.5 $\mu m$ or more and 100 $\mu m$ or less.

With such a granulated body, the surface of the sulfur-based material can be partially or entirely covered with the coating material, so that elution of lithium polysulfide can be suppressed.

As a method for granulating the active material, a known granulation method can be applied. Examples thereof include a fluidized bed granulation method, a stirring granulation method, a tumbling granulation method, a spray drying method, an extrusion granulation method, a tumbling granulation method, and a coating granulation method. Among them, a spray drying method and a fluidized bed granulation method are particularly preferable because these methods enable uniform coating.

In the spray drying method, for example, a suspension in which an active material is dispersed in a coating material is sprayed from above to a chamber heated to 50°C or higher and 300°C or lower at a rate of 1 mL/min or more and 30 mL/min or less and an air pressure of 0.01 MPa or more and 5 MPa or less to form agglomerated particles, and the aggregated particles are dried to obtain a granulated product.

In the fluidized bed granulation method, a granulated product is obtained by, for example, the following procedure. A powder raw material (granulated precursor) is placed in a fluidized bed granulator, and then mixed while being allowed to flow by sending warm air heated to 50 to 300°C from below. Then, water in which a coating material is dissolved in the mixed powder raw material is sprayed through the nozzle from above so that the coating material is uniformly sprayed onto the powder surface at 1 mL/min or more and 30 mL/min or less and an air pressure of 0.01 MPa or more and 5 MPa or less, to thereby form agglomerated particles. The aggregated particles are then dried to obtain the granulated product.

The sulfur-based material exhibits strong acidity when being brought into contact with water before lithiation or sodium conversion. Thus, there is a problem that the current collector is oxidized when a water-based binder is used. As a countermeasure for this problem, a method of using a current collector provided with a carbon layer on the surface of the current collector is conceivable. However, the cost of the current collector provided with the carbon layer is higher than that of the current collector without the carbon layer.

Therefore, by coating the active material with the silicate, the acid in the material is neutralized to produce the sulfate, and the damage of the current collector caused when the water-based binder is used can be reduced. In addition, the high-temperature durability of the electrode is improved.

Incidentally, an aqueous solution in which the silicate is dissolved exhibits strong alkalinity (pH 10 or higher), but does not react exceptionally with aluminum. Therefore, the current collector is not damaged by the alkali metal silicate.

The electrode preferably contains 0.1 to 60 mass%, more preferably 0.5 to 30 mass% of binder when the total of the active material, the binder, and the conductive auxiliary agent contained in the active material layer is 100 mass%.

When the content of the binder is less than 0.1 mass%, the mechanical strength of the electrode is low, so that the active material is likely to fall off when the coating material is applied, and the cycle life characteristics of the power storage device may be deteriorated. On the other hand, when the content exceeds 60 mass%, the ionic conductivity and the electron conductivity are lowered, and the proportion of the active material as the power storage device is small, resulting in low electrode capacity density.

Examples of the binder for an electrode include materials generally used, for example, organic materials such as polyvinylidene fluoride (PVdF), polytetrafluoroethylene (PTFE), polyimide (PI), polyamide, polyamideimide, aramid, polyacrylic, styrene-butadiene rubber (SBR), ethylene-vinyl acetate copolymer (EVA), styrene-ethylene-butylene-styrene copolymer (SEBS), carboxymethyl cellulose (CMC), carboxymethyl cellulose salt (CMC-Li, CMC-Na, CMC-K, CMC-NH$_4$), xanthan gum, polyvinyl alcohol (PVA), ethylene vinyl alcohol, polyvinyl butyral (PVB), polyethylene (PE), polypropylene (PP), polyacrylic acid, lithium polyacrylate, sodium polyacrylate, potassium polyacrylate, ammonium polyacrylate, polymethyl acrylate, polyethyl acrylate, polyacrylic acid amine, polyacrylic acid ester, epoxy resin, polyethylene terephthalate (PET), polybutylene terephthalate (PBT), nylon, vinyl chloride, silicone rubber, nitrile rubber, cyanoacrylate, urea resin, melamine resin, phenol resin, latex, polyurethane, silylated urethane, nitrocellulose, dextrin, polyvinylpyrrolidone, vinyl acetate, polystyrene, chloropropylene, resorcinol resin, polyaromatic, modified silicone, methacrylic resin, polybutene, butyl rubber, 2-propenoic acid, cyanoacrylic acid, methyl methacrylate, glycidyl methacrylate, acrylic oligomer, 2-hydroxyethyl acrylate, alginic acid, starch, sumac, sucrose, glue, casein, and cellulose nanofibers. One type of organic material may be used alone, or two or more types thereof may be used in combination.

These organic materials (organic binders) and inorganic binders may be mixed. The inorganic binder may be, for example, a sol-based binder or a cement-based binder in addition to the silicate-based binder or the phosphate-based binder as described in patent literatures (JP 6149147 B, JP 2018-063912 A). Examples thereof include inorganic materials such as lithium silicate, sodium silicate, potassium silicate, cesium silicate, guanidine silicate, ammonium silicate, fluorosilicate, borate, lithium aluminate, sodium aluminate, potassium aluminate, aluminosilicate, lithium aluminate, sodium aluminate, potassium aluminate, polyaluminum chloride, polyaluminum sulfate, polyaluminium silicate sulfate, aluminum sulfate, aluminum nitrate, ammonium alum, lithium alum, sodium alum, potassium alum, chromium alum, iron alum, manganese alum, nickel ammonium sulfate, diatomaceous earth, polyzirconoxane, polytantaloxane, mullite, white carbon, silica sol, colloidal silica, fumed silica, alumina sol, colloidal alumina, fumed alumina, zirconia sol, colloidal zirconia, fumed zirconia, magnesia sol, colloidal magnesia, fumed magnesia, calcia sol, colloidal calcia, fumed calcia, titania sol, colloidal titania, fumed titania, zeolite, silicoaluminophosphate zeolite, sepiolite, montmorillonite, kaolin, saponite, aluminum phosphate, magnesium phosphate, calcium phosphate, iron phosphate, copper phosphate, zinc phosphate, titanium phosphate, manganese phosphate, barium phosphate, tin phosphate, low melting point glass, plaster, gypsum, magnesium cement, litharge cement, Portland cement, blast furnace cement, fly ash cement, silica cement, phosphate cement, concrete, and solid electrolyte. One type of inorganic material may be used alone, or two or more types thereof may be used in combination.

Among them, inorganic materials such as lithium silicate, sodium silicate, potassium silicate, guanidine silicate, ammonium silicate, fluorosilicate, aluminosilicate, aluminum phosphate, magnesium phosphate, and calcium phosphate are preferable from the viewpoint of binding property, electrolytic solution elution resistance, oxidation reduction resistance, energy density, and the like.

However, when an electrode is produced only with an inorganic binder, the specific gravity of the inorganic binder is large, so that the electrode energy density per weight tends to be low.

In the binder for an electrode, when the solvent used for dispersing or dissolving the binder component is an organic solvent such as NMP, the sulfur component in the active material may be dissolved in the solvent of the binder to decrease the electric capacity. Therefore, the binder is preferably a water-based (aqueous) binder. The water-based binder means a binder in which a solvent used for dispersing or dissolving the binder component is water.

The electrode using the water-based binder becomes a power storage device excellent in high-temperature durability because the binder does not absorb the electrolytic solution solvent to swell when the power storage device is operated in a high-temperature environment.

The conductive auxiliary agent for an electrode is not particularly limited as long as it has electron conductivity. Examples thereof include a metal, a carbon material, a conductive polymer, and conductive glass. A carbon material is preferable from the viewpoint of high electron conductivity and oxidation resistance. Specific examples of the carbon material include acetylene black (AB), Ketjen black (KB), furnace black (FB), thermal black, lamp black, channel black, roller black, disk black, carbon black (CB), carbon fibers (for example, vapor grown carbon fibers under the name VGCF, which is a registered trademark), carbon nanotube (CNT), carbon nanohorn, graphite, graphene, glassy carbon, and amorphous carbon, and one type or two or more types thereof may be used.

The conductive auxiliary agent is preferably contained in an amount of 0 to 30 mass% when the total of the active material, the binder, and the conductive auxiliary agent contained in the electrode is 100 mass%. That is, the conductive auxiliary agent is contained as necessary. When the content of conductive auxiliary agent exceeds 30 mass%, the proportion of the active material as a power storage device is small, so that the electrode capacity density tends to be low.

The material of the current collector is not particularly limited as long as it is a material having electron conductivity and capable of electrically conducting the held sulfur-based active material. However, in the case of the negative electrode, a material that is hardly alloyed with lithium is preferable. In the case of the positive electrode, a material that is hardly oxidized is preferable. For example, in the negative electrode, a conductive material such as C, Ti, Cr, Ni, Cu, Mo, Ru, Rh, Ta, W, Os, Ir, Pt, Al, or Au, or an alloy containing two or more of these conductive materials (for example, stainless steel, Ni-Fe alloy) can be used.

For example, in the positive electrode, a conductive material such as C, Ti, Cr, Ni, Cu, Mo, Ru, Rh, Ta, W, Os, Ir, Pt, Au, or Al, or an alloy containing two or more of these conductive materials (for example, stainless steel, Al-Fe alloy) can be used. In addition, the current collector may be a multilayer structure of dissimilar metals such as iron coated with Al and Al coated with C. The material of the current collector is preferably Al or an alloy using Al because the material cost of the current collector and the weight of the power storage device are reduced.

The shape of the current collector includes a linear shape, a rod shape, a plate shape, a foil shape, and a porous shape. The shape of the current collector may be a porous shape because the packing density can be increased and the coating material easily penetrates into the active material layer. Examples of the porous shape include a mesh, a woven fabric, a non-woven fabric, an embossed body, a punched body, a perforated body, an expanded body, and a foamed body. Among these, the shape of the base material for the current collector is preferably an embossed body or a foamed body because of favorable output characteristics. The porosity of the porous current collector is not particularly limited, but may be 1 to 95%.

By applying a coating material having a silanol group to the active material layer of the sulfur-based electrode thus obtained, an electrode for a lithium ion power storage device in which the coating material having a silanol group is present at least on the surface of the active material layer can be produced.

In this electrode, a coating material having a silanol group may also be present in the active material layer. According to this configuration, application of the coating material or the like to the negative electrode allows the coating material to penetrate into the negative electrode active material layer, increasing a specific surface area for trapping hydrogen sulfide gas in the negative electrode active material layer. As a result, hydrogen sulfide gas generated from the active material can be efficiently trapped.

In the power storage device according to one aspect of the present invention, it is preferable that the coating material having a silanol group is present in the active material layer, and a gap is present between the active materials in the active material layer. For example, when the coating material is applied to the electrode, the coating material penetrates into the electrode active material layer. Meanwhile, the gap between the active materials in the electrode active material layer is not completely filled with the coating material, and the gap between the active materials of the electrode remains. This not only increases the specific surface area for trapping hydrogen sulfide gas, but also increases the permeability of the electrolytic solution, and thus improves the output characteristics of the power storage device. In addition, such a configuration allows expansion and contraction of the active material at the time of charging and discharging, and suppresses occurrence of wrinkles, cracks, and the like of the current collector of the electrode.

Depending on the capacity per unit of the electrode, for example, when the capacity per unit area of the single-side coated electrode is 3 mAh/cm$^2$, a preferable application amount of the coating material per unit area of the single-side coated electrode is 0.01 mg/cm$^2$ or more and 3 mg/cm$^2$ or less. Alternatively, the coating material per unit area of the double-side coated electrode is 0.02 mg/cm$^2$ or more and 6 mg/cm$^2$ or less. More preferably, the coating material per unit area of the single-side coated electrode is 0.02 mg/cm$^2$ or more and 0.5 mg/cm$^2$ or less, or the coating material per unit area of the double-side coated electrode is 0.05 mg/cm$^2$ or more and 0.3 mg/cm$^2$ or less.

In this electrode, although it varies depending on the capacity per unit area of the electrode even when the total solid content of the active material, the conductive auxiliary agent, the binder, and the coating material is 100 mass%, for example, when the capacity per unit area of the single-side coated electrode is 3 mAh/cm$^2$, the content of the coating material is preferably 0.1 mass% or more and 30 mass% or less, more preferably 0.2 mass% or more and 20 mass% or less, and still more preferably 0.5 mass% or more and 10 mass% or less.

In general, when a coating material is applied to the surface of the electrode, electrode resistance increases. This is because the coating material reduces ionic conductivity. However, in the electrode used in the power storage device, an electrode with small polarization can be obtained by setting the application amount in the above-described range, and the power storage device using this electrode is excellent in input-output characteristics. This is beyond the range that a person skilled in the art can easily conceive, and the reason is not clear at present.

In the electrode using the sulfur-based material, the active material layer before application of the coating material is preferably a porous body having a porosity of 20% or more and 80% or less. When the porosity of the active material layer before application of the coating material is a small value, an electrode having excellent electron conductivity is obtained. When the porosity is less than 20%, the coating material hardly penetrates into the active material layer when the coating material is applied, so that hydrogen sulfide is hardly efficiently trapped when the electrode comes into contact with moisture. In addition, the coating material is easily deposited on the active material, decreasing the ionic conductivity. On the other hand, when the porosity exceeds 80%, not only the volume energy density of the electrode decreases, but also the electron conductivity of the active material layer is poor, resulting a power storage device lacking in output characteristics.

In the electrode having the void described above, by applying a coating material to a negative electrode active material layer, a negative electrode in which the surface of the void is coated with the coating material is obtained. Here, the void is a concept including all of an independent space blocked from the outer surface, a space (so-called recess) having one path connected to the outer surface, and a space (so-called through hole) having a plurality of paths connected to the outer surface. The outer surface is an outermost surface of the active material layer, that is, a surface that comes into contact with the roll portion when the electrode is rolled for pressure adjustment by a roll press.

In the electrode after application of the coating material, the electrode active material layer is preferably a porous body having a porosity of 5% or more and 70% or less, more preferably 20% or more and 65% or less, still more preferably 25% or more and 60% or less, from the viewpoint that hydrogen sulfide gas can be efficiently trapped without deteriorating the electrode characteristics.

Here, the porosity of the active material layer is a value calculated by an equation of porosity (%) = 100 - (apparent density of active material layer/true density of material solid content) $\times$ 100 from the apparent density of the active material layer and the true density of the solid content of the constituent material.

The thickness of the coating material present on the surface of the void is preferably 10 nm or more and 5,000 nm or less. When the thickness is less than 10 nm, it is difficult to efficiently trap hydrogen sulfide when the electrode comes into contact with moisture. In addition, when lithium polysulfide is generated, the lithium polysulfide is eluted in the electrolytic solution solvent to reduce the electric capacity. On the other hand, when the thickness exceeds 5,000 nm, not only the weight energy density of the electrode decreases, but also the ionic conductivity of the electrode active material layer is poor, resulting in a power storage device lacking in output characteristics. From such a viewpoint, the thickness is more preferably 50 nm or more and 1,000 nm or less.

When the thickness of the coating material present on the surface of the voids is within the above-described range, the apparent thickness of the electrode increases by 5,000 nm at the maximum, and increases by 1,000 nm or less at the maximum within a preferable range, and the volume energy density of the power storage device is not significantly reduced.

In addition, the coating material, which is mainly composed of an inorganic substance and is very thin, suppresses decrease in thermal conductivity of the electrode. Thus, there is a high possibility that an electrode excellent in heat dissipation can be obtained.

In the power storage device, the electrode provided with the coating material may be applied to either the negative electrode or the positive electrode, or may be applied to both the negative electrode and the positive electrode.

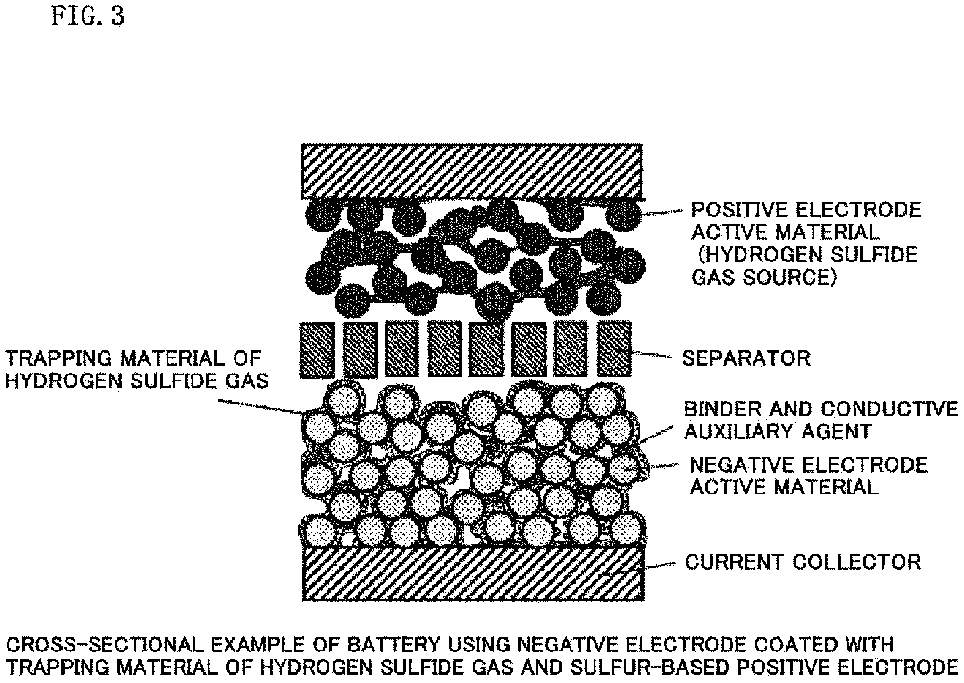

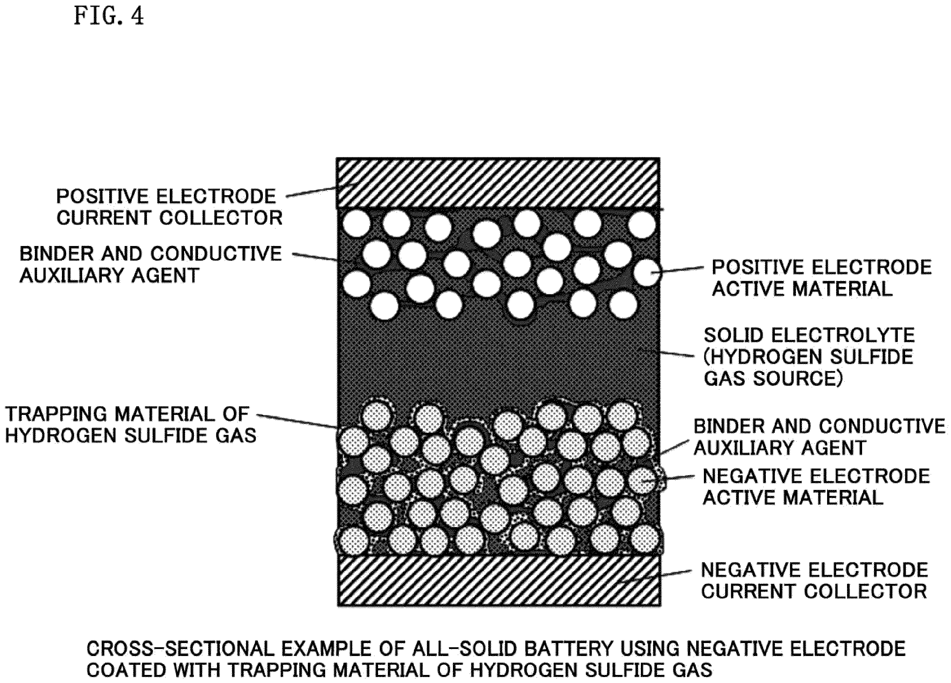

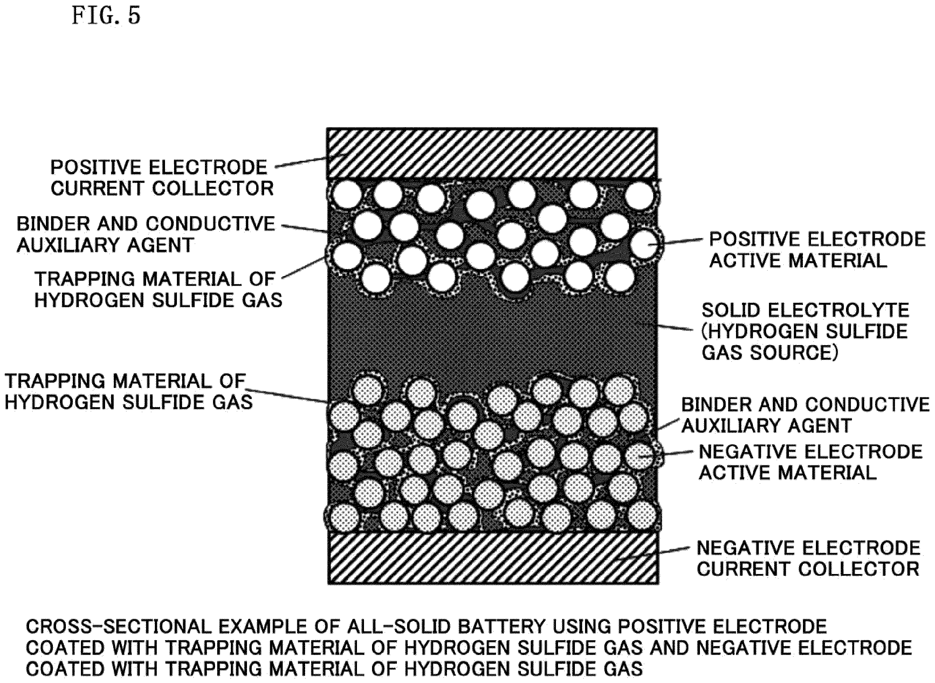

In the case of a power storage device using the above electrodes, as shown in FIG. 3, a battery structure or a capacitor structure in which a positive electrode and a negative electrode are joined with a separator interposed therebetween, and sealed in a state of being immersed in an electrolytic solution is conceivable. Alternatively, as shown in FIG. 4, the electrolytic solution may be changed to a solid electrolyte. As shown in FIG. 5, the power storage device may be a power storage device in which a solid electrolyte is used, and a coating material is provided in a positive electrode and a negative electrode. The structure of the battery is not limited thereto, and such a configuration can be applied to existing power storage device forms and structures such as a laminated battery, a wound battery, a laminated capacitor, and a wound capacitor.

The method for producing an electrode for a non-aqueous electrolyte power storage device in which the surface coating material having a silanol group is present at least on the surface of the active material layer can be configured through a step 1 of forming an active material layer on a current collector, a step 2 of coating the active material layer with the surface coating material, and a step 3 of forming a siloxane bond and a silanol group.

The step 1 is a step of mixing an active material capable of being alloyed with the same metal element as ion species responsible for electrical conduction or an active material capable of absorbing ions responsible for electrical conduction with a resin-based binder and a solvent to form a slurry (paste-like combination or mixture), applying or filling the slurry to or with a current collector, and removing the solvent to form an active material layer in the current collector.

The method for mixing the active material, the resin-based binder, and the solvent is not particularly limited as long as it is a known method for producing an electrode slurry. Examples thereof include a method of performing mixing using a multi-axis planetary mixer, a thin film shearing mixer, a rotation-revolution mixer, or the like.

The multi-axis planetary mixer is a mixing apparatus including two or more gate-shaped (frame-shaped) blades rotating and revolving, namely, planetary moving for stirring. A uniform stirring track is drawn with this movement, and mixing is performed by kneading while causing shearing between the blades and between the blades and the tank inner wall.

The thin film shear mixer is an apparatus including a rotor and a stator, and is a mixing apparatus that performs stirring by generating a shearing force between the rotor and the stator through rotation of the rotor.

The rotation-revolution mixer is a mixing apparatus in which a slurry raw material (for example, an active material, a conductive auxiliary agent, a binder, a solvent, and the like) is placed into an inclined container and then the container is moved in a planetary motion to stir the slurry by two centrifugal forces of rotation and revolution generated. In the planetary motion, it is preferable that the rotation is reversely rotated with respect to the revolution.

As a method for producing the slurry, for example, using these mixing apparatuses, the slurry may be produced by charging the active material, the conductive auxiliary agent, the binder, and the solvent in stages, mixing the materials, and then performing a defoaming treatment. Alternatively, the slurry may be produced by charging all the active material, the conductive auxiliary agent, the binder, and the solvent at once, mixing the materials, and then performing a defoaming treatment.

The defoaming treatment may be unnecessary as long as bubbles are not contained in the slurry, but it is difficult to confirm fine bubbles contained in the slurry with the naked eye. Therefore, after mixing, it is preferable to go through a step of removing bubbles by thin film defoaming, reduced pressure defoaming, vibration defoaming, addition of a defoaming agent, or the like.

The slurry thus produced preferably has a viscosity of 0.01 to 100 Pa s and a solid content of 20 to 95 mass%. The viscosity of the slurry can be adjusted by the composition of the electrode, the particle size of the electrode material, the addition amount of the thickener, increase or decrease in the amount of the solvent, and the like.

The current collector can be coated or filled with the above-described slurry by using an existing coating apparatus (coating machine). For the coating apparatus, a known coating method such as comma coating, knife coating, die coating, gravure coating, reverse roll coating, pull up coating, or spray coating can be selected.

In the case of producing a long electrode, the electrode can be produced by preparing a long current collector and applying the slurry to the current collector while controlling the supply amount of the slurry and the moving speed of the base material.

The coating method can be roughly classified into a pre-weighing method and a post-weighing method. In the pre-weighing, since a slurry adjusted to have a target application amount in advance is applied to the base material, a coating film is formed along the shape of the base material. Thus, a coating film with a constant thickness is easily obtained. In the post-metering, since an excessive amount of slurry is first applied, and the application amount is adjusted by removing the slurry so as to obtain a target application amount, a smooth application surface is formed regardless of the shape of the base material. Thus, the total thickness (the total thickness of the base material and the coating film) tends to be constant.

The slurry applied to or filled in the current collector can form the active material layer on the current collector by removing the solvent. The method for removing the solvent is not particularly limited. The solvent in the slurry can be efficiently removed by, for example, leaving the current collector coated or filled with the slurry in a temperature environment of 60 to 300°C for 1 minute or more. The current corrector is preferably left to stand in a temperature environment of 70 to 150°C for 3 minutes or more and 90 minutes or less.

The step 2 is a step of coating the surface of the active material layer with the coating material by applying at least one of an aqueous silicate solution having a silanol group or a silica fine particle dispersion having a silanol group to the active material layer prepared in the step 1 and removing a solvent of the aqueous silicate solution or the silica fine particle dispersion.

The aqueous silicate solution having a silanol group or the silica fine particle dispersion having a silanol group preferably has a solid content of 0.1 to 25 mass%. Within this range, the coating material can be present not only on the surface of the active material layer but also in the active material, and a uniform coating layer is easily obtained.

As a method for applying at least one of the aqueous silicate solution having a silanol group or the silica fine particle dispersion having a silanol group, a known coating method such as comma coating, knife coating, die coating, gravure coating, reverse roll coating, pull up coating, or spray coating can be selected as a coating apparatus.

The step 3 of forming a siloxane bond and a silanol group is a step of forming a siloxane bond and a silanol group on the surface coating material by heat treatment at 100°C or higher and 300°C or lower in an environment of a dew point of minus 20°C or lower.

In an environment in which the dew point exceeds minus 20°C in the step 3, moisture present in the surface coating material cannot be sufficiently removed, causing a decrease in power storage device performance. Therefore, the dew point is more preferably minus 30°C or lower, still more preferably minus 40°C or lower, and desirably minus 50°C or lower.

The dew point means a temperature at which water vapor in the air is cooled and condensed to form dew. The dew point can be measured by a commercially available dew point meter such as a cooling type dew point meter, an electrostatic capacitance type dew point meter, or a lithium chloride dew point meter.

Means for providing an environment at the dew point described above is not particularly limited. Examples thereof include a method of supplying dry air to a specific space (corresponding to a dry room, a dry booth, drying facility, and the like), a method of supplying an inert gas to a specific space (corresponding to a glove box), and a method of depressurizing a specific space (glass tube oven, depressurization facility, and the like).

When the temperature of the heat treatment in the step 3 is lower than 100°C, moisture present in the surface coating material cannot be sufficiently removed, causing a decrease in power storage device performance. However, at a temperature higher than 300°C, the abundance of the silanol group in the surface coating material is reduced, and the surface coating material is crystallized, so that amorphousness is easily lost, and the effect of the present invention is hardly exhibited. Therefore, the temperature is more preferably 105°C or higher and 280°C or lower, still more preferably 110°C or higher and 260°C or lower, and desirably 120°C or higher and 220°C or lower.

The heating method is not particularly limited as long as the electrode is within the above-described temperature range, and an existing heating method can be used. Examples thereof include hot air heating, hot plate heating, far infrared ray heating, middle and near infrared ray heating, laser heating, and flame heating.

In the case of a power storage device containing no sulfur-based material in the negative electrode and using a positive electrode containing a sulfur-based material or a sulfur-based solid electrolyte, the negative electrode active material (negative electrode material) is not particularly limited as long as it is a negative electrode active material used in a non-aqueous electrolyte secondary battery or a non-electrolyte ion capacitor. That is, any active material capable of being alloyed with the same metal element as ion species responsible for electrical conduction or any negative electrode active material capable of absorbing ions responsible for electrical conduction can be used. Specifically, in the case of a lithium ion battery, the active material used for the negative electrode is not particularly limited as long as it is a material capable of reversibly absorbing and desorbing lithium ions or a material capable of being alloyed with lithium. The material may be, for example, at least one element selected from the group consisting of Li, C, Mg, Al, Si, P, Ca, Sc, Ti, V, Cr, Mn, Fe, Co, Ni, Cu, Zn, Ga, Ge, Y, Zr, Nb, Mo, Pd, Ag, Cd, In, Sn, Sb, W, Pb, S, and Bi, or an alloy, a composite, an oxide, a chalcogenide, or a halide using these elements.

From the viewpoint of the energy density of the negative electrode, the element is preferably Li, Na, K, Mg, Ca, Al, Si, Zn, Ge, Ag, Sn, S, or the like; the alloy is preferably each combination of Si-Al, Al-Zn, Al-Li, Mg-Li, Si-Mg, Si-La, Al-Ge, Si-Ge, Si-Ag, Si-Sn, Si-Ti, Si-Y, Si-Cr, Si-Ni, Si-Zr, Si-V, Si-Nb, Si-Mo, Zn-Sn, Ge-Ag, Ge-Sn, Ge-Sb, Ag-Sn, Ag-Ge, Sn-Sb, S-Sn, S-Sb, or the like; and the oxide is preferably SiO, $Fe_2O_3$, CuO, $MnO_2$, NiO, $Li_4Ti_5O_{12}$, $H_2Ti_{12}O_{25}$, or the like. The alloy may be a complete solid solution alloy, an eutectic alloy, a hypoeutectic alloy, a hypereutectic alloy, or a peritectic alloy. In addition, the surfaces of the active material particles may be coated with a material or ceramic having excellent electron conductivity. Note that two or more types of materials capable of reversibly absorbing and desorbing these lithium ion may be used.

However, when the negative electrode active material has a large irreversible capacity, if the pre-doping treatment is not performed in advance before assembling the battery or the capacitor, the capacity of the power storage device is extremely lowered. Therefore, it is preferable to perform the pre-doping treatment.

In the case of a power storage device using a sulfur-based material for the negative electrode, the positive electrode is not particularly limited as long as it is a positive electrode used in a non-aqueous electrolyte secondary battery or a non-aqueous electrolyte capacitor. That is, known electrodes including an alkali metal transition metal oxide-based electrode, a vanadium-based electrode, a solid solution-based (lithium-excess) electrode, a carbon-based electrode, an organic-based electrode, and the like are used. In the case of an ion capacitor using a sulfur-based material for the negative electrode, the positive electrode is not particularly limited as long as it is a positive electrode used in a non-aqueous electrolyte ion capacitor. That is, a known electrode containing activated carbon which is a porous carbon material is used.

Examples of the alkali metal transition metal oxide-based active material include $LiCoO_2$, $Li_{0.9}Na_{0.1}CoO_2$, $LiNiO_2$, $LiNi_{0.5}Co_{0.5}O_2$, $LiNi_{0.33}Mn_{0.33}Co_{0.33}O_2$, $LiNi_{0.5}Mn_{0.2}Co_{0.3}O_2$, $LiNi_{0.6}Mn_{0.2}Co_{0.2}O_2$, $LiNi_{0.8}Mn_{0.1}Co_{0.1}O_2$, Li(Ni, Co, Al)$O_2$, $LiMnO_2$, $LiMn_2O_4$, $LiFePO_4$, $LiFe_{0.5}Mn_{0.5}PO_4$, $LiMnPO_4$, $Li_2MnSiO_4$, $Li_2FeSiO_4$, $Li_2$(Mn, Fe)$SiO_4$, $Li_2CoSiO_4$, $Li_2MgSiO_4$, $Li_2CaSiO_4$, $Li_2ZnSiO_4$, $LiNb_2O_5$, $LiNbO_2$, $LiFeO_2$, $LiMgO_2$, $LiCaO_2$, $LiTiO_2$, $LiTiS_2$, $LiCrO_2$, $LiRuO_2$, $LiCuO_2$, $LiZnO_2$, $LiMoO_2$, $LiMoS_2$, $LiTaO_2$, and $LiWO_2$.

Examples of the vanadium-based active material include $LiV_2O_5$, $LiVO_2$, $Li_3VO_4$, and $Li_3V_2(PO_4)_3$.

Examples of the solid solution-based active material include $Li_2MnO_3$-$LiNiO_2$, $Li_2MnO_3$-$LiMnO_2$, $Li_2MnO_3$-$LiCoO_2$, $Li_2MnO_3$-Li(Ni, Mn)$O_2$, $Li_2MnO_3$-Li(Ni, Co)$O_2$, $Li_2MnO_3$-Li(Mn, Co)$O_2$, and $Li_2MnO_3$-Li(Ni, Mn, Co)$O_2$.

Examples of the carbon-based active material include graphite, soft carbon, hard carbon, and glassy carbon. Examples of the organic-based active material include rubeanic acid, tetracyanoquinodimethane, triquinoxalinylene, phenazine dioxide, trioxotriangulene, indigo carmine, nitronyl nitroxide radical compounds, radialenebased compounds, aliphatic cyclic nitroxyl radicals, and benzoquinones.

The alkali metal transition metal oxide-based, vanadium-based, solid solution-based (lithium-excess), carbon-based, and organic-based positive electrode active materials may be materials in which all or a part of the oxygen site is replaced with fluorine, or materials in which a part of the lithium site is replaced with another alkali metal element.

The above-described positive electrode active materials may be used alone or in combination of two or more types thereof.

The electrolyte used in the power storage device may be any liquid or solid that can transfer lithium ions from the positive electrode to the negative electrode or from the negative electrode to the positive electrode. The same electrolyte as the electrolyte used in a known lithium ion battery or lithium ion capacitor can be used. Examples thereof include an electrolytic solution, a gel electrolyte, a solid electrolyte, an ionic liquid, and a molten salt. Here, the electrolytic solution refers to a solution in which an electrolyte is dissolved in a solvent.

The electrolytic solution, which needs to contain lithium ions, is not particularly limited as long as it is used in a lithium ion battery or a lithium ion capacitor, but is composed of an electrolyte salt and an electrolyte solvent.

The electrolyte salt, which needs to contain lithium ions, is not particularly limited as long as it is used in a lithium ion battery or a lithium ion capacitor, but a lithium salt is suitable. As the lithium salt, at least one selected from the group consisting of lithium hexafluorophosphate ($LiPF_6$), lithium perchlorate ($LiClO_4$), lithium tetrafluoroborate ($LiBF_4$), lithium trifluoromethanesulfonate ($LiCF_3SO_4$), lithium bistrifluoromethanesulfonylimide ($LiN(SO_2CF_3)_2$), lithium bispentafluoroethanesulfonylimide ($LiN(SO_2C_2F_5)_2$), lithium bisoxalate borate ($LiBC_4O_8$), and the like can be used. Among the lithium salts, $LiPF_6$ is particularly preferable because it has high electronegativity and is easily ionized. An electrolytic solution containing $LiPF_6$ is excellent in charge-discharge cycle characteristics, and can improve the charge-discharge capacity of the secondary battery or the capacitor.

The solvent of the electrolyte is not particularly limited as long as it is used in a lithium ion battery or a lithium ion capacitor. For example, at least one selected from the group consisting of propylene carbonate (PC), ethylene carbonate (EC), dimethyl carbonate (DMC), diethyl carbonate (DEC), ethyl methyl carbonate (EMC), diphenyl carbonate, γ-butyrolactone (GBL), γ-valerolactone, methyl formate (MF), 2-methyltetrahydrofuran, 1,3-dioxolane, 4-methyl-1,3-dioxolane, dimethoxyethane (DME), 1,2-diethoxyethane, diethyl ether, sulfolane, tetrahydrofuran (THF), methyl sulfolane, nitromethane, N,N-dimethylformamide, dimethyl sulfoxide, vinylene carbonate (VC), vinyl ethylene carbonate (VEC), fluoroethylene carbonate (FEC), and ethylene sulfite (ES) can be used. Among them, at least one of PC, EC, DMC, DEC, EMC, and the like is preferably used. In particular, a mixture of a cyclic carbonate such as EC or PC and a chain carbonate such as DMC, DEC, or EMC is suitable. The mixing ratio between the cyclic carbonate and the chain carbonate can be optionally adjusted in a range of 10 to 90 vol% for both the cyclic carbonate and the chain carbonate.

Among them, preferred is a solvent of an electrolyte further containing an additive such as vinylene carbonate (VC) or vinyl ethylene carbonate (VEC), fluoroethylene carbonate (FEC), ethylene sulfite (ES), bis-fluorosulfonylimide salt ($F_2LiNO_4S_2$, $F_2NaNO_4S_2$, $F_2KNO_4S_2$), difluorophosphate ($F_2LiO_2P$, $F_2NaO_2P$, $F_2KO_2P$), difluoroborate ($LiBF_2O$, $NaBF_2O$, $KBF_2O$), methyl acetate ($C_2H_6O_2$), methyl difluoroacetate ($C_3H_4F_2O_2$), or phosphazene compound ($N_3P_3$-$X_6$). The content of these additives is preferably 0.1 to 20 mass%, and more preferably 0.2 to 10 mass% when the amount of the electrolytic solution (total amount of the electrolyte and the solvent) is 100 mass%.

The concentration of the lithium salt in the electrolytic solution is preferably 0.5 to 2.5 mol/L, and more preferably 0.8 to 2.0 mol/L.

The ionic liquid and the molten salt are classified into a pyridine type, an alicyclic amine type, an aliphatic amine type, and the like according to the type of cation. By selecting the type of anion to be combined therewith, various ionic liquids or molten salts can be synthesized. Examples of the cation to be used include ammonium ions such as imidazolium salts and pyridinium salts, phosphonium ions, and inorganic ions. Examples of the anion to be used include halogen ions such as bromide ions, triflate, boron ions such as tetraphenylborate, and phosphorus ions such as hexafluorophosphate.

The ionic liquid or the molten salt can be obtained by, for example, a known synthesis method of combining a cation such as imidazolium with an anion such as $Br^-$, $Cl^-$, $BF_4^-$, $PF_6^-$, $(CF_3SO_2)_2N^-$, $(FSO_2)_2N^-$, $CF_3SO_3^-$, or $FeCl_4^-$. An ionic liquid or a molten salt can function as an electrolytic solution without adding an electrolyte.

In the case of a non-aqueous electrolyte power storage device other than a lithium ion battery or a lithium ion capacitor, the above-described materials of the positive electrode active material, the negative electrode active material, and the electrolyte may be materials in which the lithium element is replaced with the same metal element as ions responsible for electric conduction. Therefore, in a sodium ion battery and a sodium ion capacitor, a material in which the lithium element described above is replaced with a sodium element may be used because ions responsible for electrical conduction is sodium. For example, $LiCoO_2$ as a positive electrode material is changed to $NaCoO_2$, and $LiPF_6$ as an electrolyte is changed to $NaPF_6$. In a potassium ion battery and a potassium ion capacitor, a material in which the lithium element described above is replaced with a potassium element may be used because ions responsible for electrical conduction is potassium. For example, $LiV_2O_5$ as a positive electrode material is changed to $KV_2O_5$, and $LiBF_4$ as an electrolyte material is changed to $KBF_4$.

An assembled power storage device (assembled battery or assembled capacitor) according to one aspect of the present invention includes the power storage device of the present invention.

An electric device according to one aspect of the present invention includes the power storage device or the assembled battery, and the assembled capacitor of the present invention.

Examples of the electric device include irons, whisks, integrated personal computers, clothes dryers, medical devices, earphones, intercoms, wearable terminals, spacecrafts, space telescopes, space stations, video equipment, air conditioners, air circulators, gardening machines, motorcycles, ovens, music players, music recorders, warm air heaters, toys, car component stereos, flashlights, loudspeakers, car navigation devices, cassette stoves, household storage batteries, nursing care machines, humidifiers, driers, tankers, water supply devices, suction devices, cashboxes, glue guns, air cleaners, air conditioned clothing, mobile phones, portable information devices, game machines, fluorescent lamps, lint removers, cordless phones, coffee makers, coffee warmers, ice shavers, Japanese foot warmers, copying machines, haircut equipment, shavers, mowers, automobiles, lighting equipment, dehumidifiers, sealers, shredders, automated external defibrillators, artificial satellites, rice cookers, stereos, stoves, speakers, trouser presses, smartphones, rice milling machines, washing machines, toilet seats with washing function, sensors, electric fans, submarines, air blowers, vacuum cleaners, flying cars, tablets, body fat meters, fishing gears, digital cameras, televisions, television receivers, video games, displays, disc changers, desktop personal computers, railways, televisions, electric carpets, desk lamps, electric stoves, electric pots, electric blankets, electronic calculators, electric carts, electric wheelchairs, electric tools, electric vehicles, electric floats, electric toothbrushes, telephones, electric bicycles, electric bug killers, electromagnetic cookers, electronic organizers, electronic musical instrument, electronic locks, electronic cards, microwave ovens, electronic mosquito repellents, electronic cigarettes, phones, power load leveling devices, toasters, dryers, transceivers, clocks, drones, garbage processors, fuel cell vehicles, laptop computers, incandescent lamps, soldering irons, panel heaters, halogen heaters, fermenters, baking machines, hybrid vehicles, personal computers, personal computer peripheral devices, hair clippers, semiconductors, video cameras, video decks, airplanes, emergency lamps, emergency storage batteries, ships, beauty devices, printers, duplicating machines, pulverizers, sprayers, facsimile machines, forklifts, plug-in hybrid vehicles, projectors, hair driers, hair irons, headphones, disaster prevention devices, crime prevention devices, home theaters, hot sand makers, hot plates, pumps, aroma diffusers, massage machines, mixers, mills, movie players, monitors, rice cake making machines, water heaters, floor heating panels, radios, radio cassettes, lanterns, radio-controlled devices, laminators, remote controllers, cooking ranges, cold water coolers, refrigerators, cool air blowers, cool air fans, cooling devices, robots, word processors, and global positioning systems (GPS).

Advantageous Effects of Invention

In the non-aqueous electrolyte power storage device according to the present invention, hydrogen sulfide gas generated from the inside of the power storage device for some reason can be trapped in the power storage device, thereby preventing outflow of the hydrogen sulfide gas to the outside of the power storage device. When the sulfur-based material is used for the negative electrode, elution of lithium polysulfide into the electrolytic solution can be suppressed.

Brief Description of Drawings

FIG. 1 is a view illustrating a cross-sectional example of an electrode coated with a coating material according to a power storage device of the present invention.

FIG. 2 includes views illustrating gas external release paths at the time of generation of hydrogen sulfide gas depending on the presence or absence of a coating material. In FIG. 2, (a) illustrates an example without a coating material, (b) illustrates an example with a coating material, and arrows indicate gas external release paths when hydrogen sulfide gas is generated.

FIG. 3 is a view illustrating a cross section of a battery showing an embodiment of a power storage device of the present invention.

FIG. 4 is a view illustrating a cross section of a battery showing an embodiment of a power storage device of the present invention.

FIG. 5 is a view illustrating a cross section of a battery showing an embodiment of a power storage device of the present invention.

FIG. 6 includes views illustrating various forms of silanol groups.

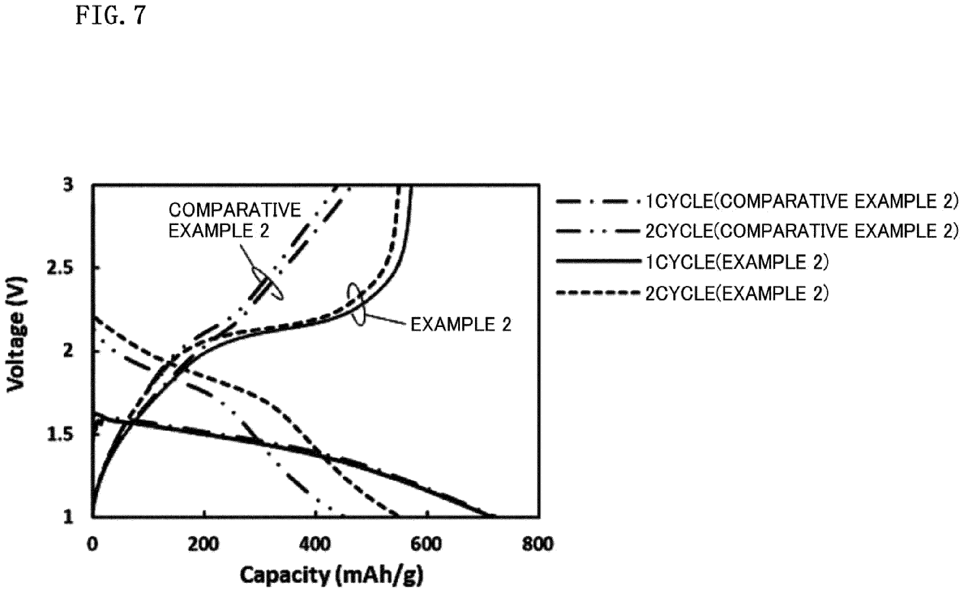

FIG. 7 is a graph showing initial charge-discharge curves in comparison between Comparative Example 2 and Example 2.

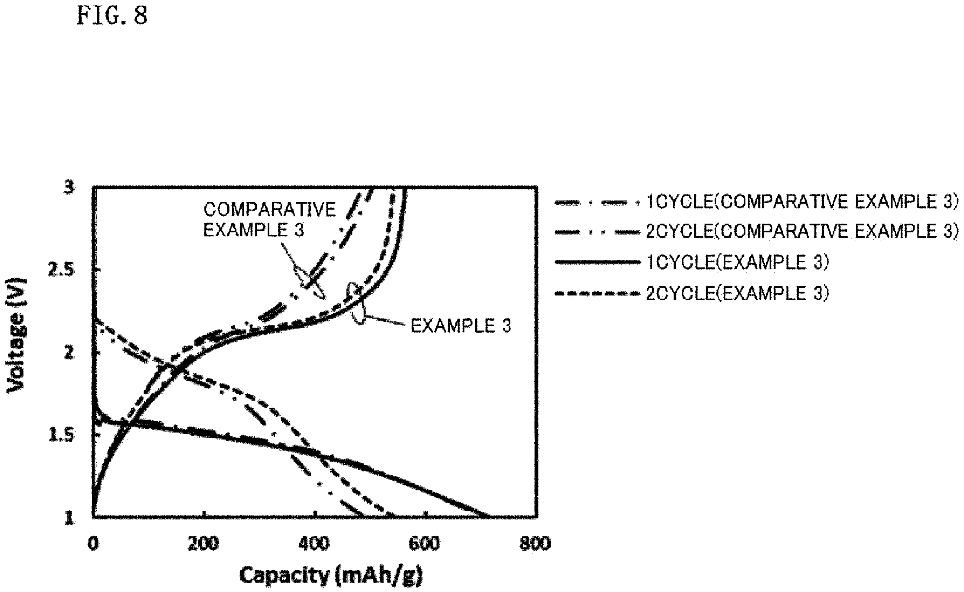

FIG. 8 is a graph showing initial charge-discharge curves in comparison between Comparative Example 3 and Example 3.

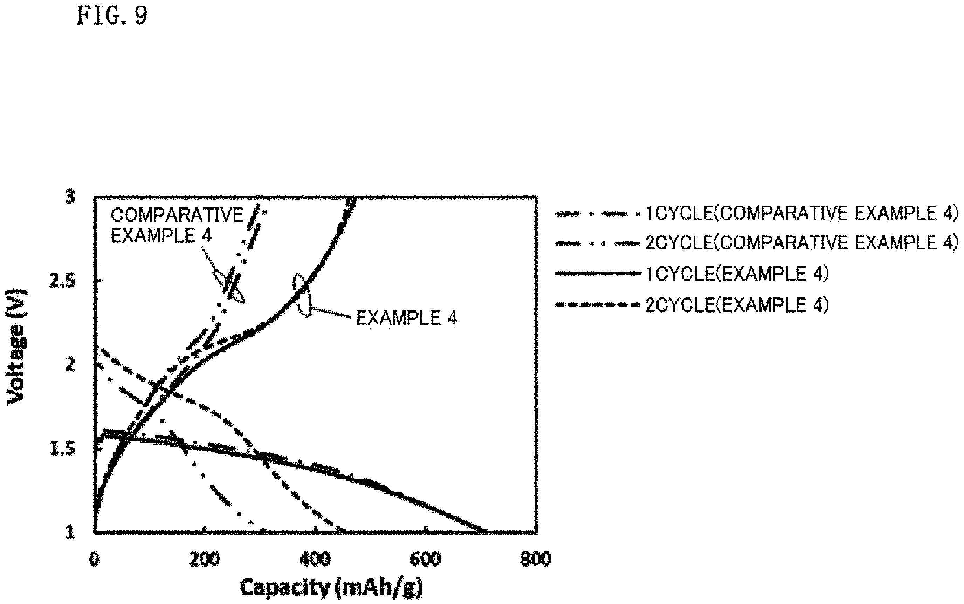

FIG. 9 is a graph showing initial charge-discharge curves in comparison between Comparative Example 4 and Example 4.

Examples

Hereinafter, Examples according to the present invention will be described more specifically, but the present invention is not limited to these Examples at all. In particular, in Examples, sodium silicate will be described as an example, but the present invention is not limited thereto. In addition, sulfur-modified polyacrylonitrile will be described as an example of the sulfur-based material, but the sulfur-based material is not limited thereto. In addition, the description will be made using a sulfur-based material for the electrode, but the present invention is not limited thereto. In addition, a lithium ion battery will be described as an example of the power storage device, but the power storage device is not limited thereto.

<Synthesis of sulfur-modified polyacrylonitrile>

(Sulfur-modified polyacrylonitrile-1)

Sulfur-modified polyacrylonitrile-1 was obtained by firing a mixed powder prepared so as to have a mass ratio of polyacrylonitrile to elemental sulfur of 1 : 5 in a nitrogen gas atmosphere at 400°C for 1 hour, performing desulfurization under reduced pressure, and then classifying the resultant. The obtained sulfur-modified polyacrylonitrile-1 had a median diameter (Dso) of 9 $\mu$m.

(Sulfur-modified polyacrylonitrile-2)

Sulfur-modified polyacrylonitrile-2 was obtained by pulverizing sulfur-modified polyacrylonitrile-1 in the air with an automatic mortar (manufactured by Nitto Kagaku Co., Ltd.: ANM 1000) for 1 hour. The obtained sulfur-modified polyacrylonitrile-2 had a median diameter (Dso) of 8 $\mu$m.

(Sulfur-modified polyacrylonitrile-3)

Sulfur-modified polyacrylonitrile-3 was obtained by placing sulfur-modified polyacrylonitrile-1 and zirconia balls having a diameter of 4 mm in a zirconia container under an argon gas environment, sealing the container, and then performing a mechanical milling treatment with a planetary ball mill (manufactured by Fritsch GmbH: PULVERISETTE 7) under conditions of a rotation speed of 360 rpm (gravitational acceleration: about 10 G) and 1 hour. The obtained sulfur-modified polyacrylonitrile-3 had a median diameter (Dso) of 3 $\mu$m.

(Sulfur-modified polyacrylonitrile-4)

Sulfur-modified polyacrylonitrile-4 was obtained by placing sulfur-modified polyacrylonitrile-1 and zirconia balls having a diameter of 4 mm in a zirconia container under an argon gas environment, sealing the container, and then performing a mechanical milling treatment with a high-speed planetary ball mill (manufactured by Kurimoto, Ltd.: Kurimoto High G) under conditions of an input frequency of 33.7 Hz (gravitational acceleration: about 50 G) and 1 hour. The obtained sulfur-modified polyacrylonitrile-4 had a median diameter (Dso) of 3 $\mu$m.

<Preparation of sulfur-modified polyacrylonitrile negative electrode>

(Comparative Example 1)

The electrode of Comparative Example 1 was prepared by applying a slurry composed of sulfur-modified polyacrylonitrile-1, styrene-butadiene rubber (SBR), carboxymethyl cellulose (CMC-Na), and carbon black to a carbon-coated aluminum foil (thickness: 20 $\mu$m) with a doctor blade, then drying the carbon coated aluminum foil at 80°C in the air, and then heat-treating the carbon coated aluminum foil at 150°C for 10 hours in a vacuum. The capacity density per one side of the electrode was set to 2 mAh/cm$^2$.

(Comparative Example 2)

The electrode of Comparative Example 2 was prepared by applying a slurry composed of sulfur-modified polyacrylonitrile-2, an acrylic binder, and carbon black to a carbon-coated aluminum foil (thickness: 20 $\mu$m) with a doctor blade, drying the carbon coated aluminum foil at 80°C in the air, and then heat-treating the carbon coated aluminum foil at 140°C for 10 hours in a vacuum. The capacity density per one side of the electrode was set to 2.1 mAh/cm$^2$.

(Comparative Example 3)

The electrode of Comparative Example 3 was the same as that of Comparative Example 2 except that sulfur-modified polyacrylonitrile-3 was used.

(Comparative Example 4)

The electrode of Comparative Example 4 was the same as that of Comparative Example 2 except that sulfur-modified polyacrylonitrile-4 was used.

(Example 1)

The electrode of Example 1 was prepared by applying the same slurry as in Comparative Example 1 to a carbon-coated aluminum foil (thickness: 20 $\mu$m) with a doctor blade, drying the carbon-coated aluminum foil at 80°C in the air, then applying an aqueous sodium silicate solution to the active material layer of the electrode with a spray gun, drying the coated aluminum foil at 80°C in the air, and then heat-treating the coated aluminum foil at 150°C for 10 hours in a vacuum. The application amount (solid content) of sodium silicate per unit area was 0.2 mg/cm$^2$. The thickness of the electrode of Example 1 was increased by about 300 nm as compared with Comparative Example 1.
The aqueous sodium silicate solution was prepared by adding water to a silicate represented by the general formula Na$_2$O•3SiO$_2$ so as to have a solid content of 15 mass%, and adding a non-ionic surfactant (octylphenol ethoxylate) at a concentration of 5,000 ppm of the total amount. The capacity density per one side of the electrode was set to 2 mAh/cm$^2$.

(Example 2)

The electrode of Example 2 was prepared by applying the same slurry as in Comparative Example 2 to a carbon-coated aluminum foil (thickness: 20 $\mu$m) with a doctor blade, drying the carbon-coated aluminum foil at 80°C in the air, then applying an aqueous sodium silicate solution to the active material layer of the electrode with a spray gun, drying the coated aluminum foil at 80°C in the air, and then heat-treating the coated aluminum foil at 140°C for 10 hours in a vacuum.
The thickness of the electrode of Example 2 was increased by about 400 nm as compared with Comparative Example 2. The application amount (solid content) of sodium silicate per unit area was 0.2 mg/cm$^2$.
The aqueous sodium silicate solution was prepared by adding water to a silicate represented by the general formula Na$_2$O•2.9SiO$_2$ so as to have a solid content of 14.5 mass%, and adding a non-ionic surfactant (octylphenol ethoxylate) in a concentration of 2,000 ppm of the total amount. The capacity density per one side of the electrode was set to 2.1 mAh/cm$^2$.

(Example 3)

The electrode of Example 3 was the same as the electrode of Example 2 except that the same slurry as in Comparative Example 3 was used.

(Example 4)

The electrode of Example 4 was the same as the electrode of Example 2 except that the same slurry as in Comparative Example 4 was used.

<Confirmation of hydrogen sulfide gas generation by contact with water>

The lithiated test electrodes of Comparative Example 1 and Example 1 were obtained by discharging a battery, which had been repeatedly charged and discharged for 5 cycles, at 0.2 C-rate (constant current) until the battery voltage reached 1.0 V, and then disassembling the test battery. The battery was prepared using the electrode of Comparative Example 1 or Example 1 as a test electrode ($\varphi$ 11 mm), metal lithium ($\varphi$ 14 mm) as a counter electrode, 1.0 M LiPF$_6$/(EC : DEC = 50 : 50 vol.%) as an electrolytic solution, and a laminate of a glass non-woven fabric (manufactured by Advantec: GA-100) and a polyolefin microporous membrane (manufactured by Celgard, LLC.: Celgard #2325) as a separator. In the charge-discharge test, charging and discharging at 0.2 C-rate (constant current) were repeated 5 cycles under conditions of an environment of 30°C and a cutoff voltage of 1.0 to 3.0 V.
The electrode capacity per active material subjected to 5 cycles of charging and discharging was 500 mAh/g or more, and it was confirmed that the battery operated normally. The operation after disassembling the test battery was performed in a dry environment at a temperature of 20°C and a dew point of -70°C or lower.
In the contact test with water, the lithiated test electrode and ion-exchanged water (1.0 mL, 25°C) were placed in a glass container (manufactured by AS ONE Corporation: No. 6 vial bottle) having a capacity of 30 mL, the glass container was capped immediately to form a sealed state, and the glass container was allowed to stand for 5 minutes.
The concentration of hydrogen sulfide was measured by removing the cap of the glass container after standing, and pressing the gas sensing unit of a hydrogen sulfide meter (manufactured by New Cosmos Electric Co., Ltd: XS-2200) against the opening of the glass container so that hydrogen sulfide gas does not leak to the outside.
The concentration of generated hydrogen sulfide was 3.4 ppm in Comparative Example 1 and 0.0 ppm in Example 1. In the electrode of Example 1, hydrogen sulfide gas was not even detected, whereas in the electrode of Comparative Example 1, odor peculiar to hydrogen sulfide gas was confirmed.

(Comparative Example 5)

The same test was also conducted on the following electrode. For the electrode of Comparative Example 5, the aqueous sodium silicate solution applied to the active material layer of the electrode with a spray gun was changed to an NMP solution of PVDF when the electrode of Example 1 was produced. As a result of conducting a contact test with water in the same procedure as in Example 1 except for the above-mentioned difference, the concentration of generated hydrogen sulfide was 3.3 ppm, and an odor peculiar to hydrogen sulfide gas was confirmed.

The above results reveal that, by coating the electrode with a silicate, hydrogen sulfide gas is not generated even when the lithiated sulfur-modified polyacrylonitrile electrode comes into contact with water. This is considered to be because the contact between the lithiated sulfur-modified polyacrylonitrile and water was suppressed by coating with a silicate, and the generated hydrogen sulfide gas was trapped in the silicate.

<Confirmation of hydrogen sulfide gas generation by contact between moisture and solid electrolyte>

Next, generation of hydrogen sulfide when moisture and the sulfide-based solid electrolyte come into contact with each other was confirmed using the following electrodes of Example 5 and Comparative Examples 6 and 7.

(Comparative Example 6)

The electrode produced in Comparative Example 1, pellets of a sulfide-based solid electrolyte LPS ($Li_2S : P_2S_5$ = 75 : 25, mol%), and an In-Li foil were laminated and sealed in a cell case. This operation was performed in a dry environment at a temperature of 20°C and a dew point of -80°C or lower.

Next, the cell case was disassembled in an environment of a temperature of 20°C and a dew point of -20°C. The concentration of hydrogen sulfide around the case immediately after disassembling was measured using a hydrogen sulfide meter (manufactured by New Cosmos Electric Co., Ltd: XS-2200), and the concentration of generated hydrogen sulfide was 2.1 ppm. Since the electrode used in this test is not reacted with Li, hydrogen sulfide is not generated by contact between the electrode and moisture.

(Comparative Example 7)

The aqueous sodium silicate solution applied to the active material layer of the electrode with a spray gun was changed to an NMP solution of PVDF when the electrode of Example 1 was produced. For the other configurations, an electrode produced in the same procedure as in Example 1, pellets of a sulfide-based solid electrolyte LPS ($Li_2S : P_2S_5$ = 75 : 25, mol%), and an In-Li foil were laminated and sealed in a cell case. This operation was performed in a dry environment at a temperature of 20°C and a dew point of -80°C or lower.

Next, the cell case was disassembled in an environment of a temperature of 20°C and a dew point of -20°C. The concentration of hydrogen sulfide around the case immediately after disassembling was measured with a hydrogen sulfide meter (manufactured by New Cosmos Electric Co., Ltd: XS-2200), and the concentration of generated hydrogen sulfide was 2.0 ppm. Since the electrode used in this test is not reacted with Li, hydrogen sulfide is not generated by contact between the electrode and moisture.

(Example 5)

The electrode produced in Example 1, pellets of a sulfide-based solid electrolyte LPS ($Li_2S : P_2S_5$ = 75 : 25, mol%), and an In-Li foil were laminated and sealed in a cell case. This operation was performed in a dry environment at a temperature of 20°C and a dew point of -80°C or lower.

Next, the cell case was disassembled in an environment of a temperature of 20°C and a dew point of -20°C. The concentration of hydrogen sulfide around the case immediately after disassembling was measured with a hydrogen sulfide meter (manufactured by New Cosmos Electric Co., Ltd: XS-2200), and the concentration of generated hydrogen sulfide was 0.5 ppm. Since the electrode used in this test is not reacted with Li, hydrogen sulfide is not generated by contact between the electrode and moisture.

The results of Comparative Examples 6 and 7 and Example 5 reveal that, by coating the electrode with a silicate, generation of hydrogen sulfide gas is suppressed even when a sulfide-based solid electrolyte and moisture come into contact with each other. This is considered to be because hydrogen sulfide gas generated from the sulfide-based solid electrolyte was trapped in the silicate by coating the electrode with the silicate.

<Battery charge-discharge test>

The test battery was prepared using each of the electrodes of Comparative Examples 2 to 4 and Examples 2 to 4 as a test electrode ($\varphi$ 11 mm), metal lithium ($\varphi$ 14 mm) as a counter electrode, 1.0 M $LiPF_6$/(EC : DEC = 50 : 50 vol.%) as an electrolytic solution, and a laminate of a glass non-woven fabric (manufactured by ADVANTEC: GA-100) and a polyolefin microporous membrane (manufactured by Celgard, LLC.: Celgard #2325) as a separator.

In the charge-discharge test, charging and discharging at 0.1 C rate (constant current) were repeated 3 cycles under conditions of an environment of 30°C and a cutoff voltage of 1.0 to 3.0 V, and then charge and discharge at 0.5 C-rate (constant current) were repeated 50 cycles.

Table 1 shows the results of the charge-discharge test of electrodes (Examples 2 to 4, Comparative Examples 2 to 4). Table 1 shows that the cycle characteristics of Examples 2 to 4 provided with the coating material are improved as compared with Comparative Examples 2 to 4. Although it varies depending on the conditions of the mechanical pulverization treatment, pulverized sulfur-modified polyacrylonitrile is disintegrated due to pulverization or occurrence of distortion, and the sulfur component easily dissolved in the electrolytic solution solvent is exposed, which may reduce the reversible electric capacity. However, by using the electrode coated with the coating material, the area of the exposed portion is reduced, and the elution of lithium polysulfide is suppressed.

[Table 1]

| Experimental Examples | Discharge capacity of active material (mAh/g) | | |
|---|---|---|---|
| | 1 cycle (0.1 C-rate) | 2cycle (0.1C-rate) | 50cycle (0.5C-rate) |
| Example 2 | 718.44 | 553.73 | 464.74 |
| Example 3 | 717.52 | 546.33 | 462.15 |
| Example 4 | 712.63 | 455.31 | 307.97 |
| Comparative Example 2 | 725.14 | 453.64 | 408.84 |
| Comparative Example 3 | 711.60 | 493.59 | 307.01 |
| Comparative Example 4 | 711.68 | 312.23 | 159.57 |

FIG. 7 shows initial charge-discharge curves in comparison between Comparative Example 2 and Example 2. FIG. 8 shows initial charge-discharge curves in comparison between Comparative Example 3 and Example 3. FIG. 9 shows initial charge-discharge curves in comparison between Comparative Example 4 and Example 4.

FIGS. 7 to 9 reveal that, in all the experimental examples of Examples 2 to 4 and Comparative Examples 2 to 4, the voltage curves are similar and the electric capacities thereof are almost the same in the initial lithiation reaction (the process of decreasing the voltage), but behaviors thereof are significantly different in the initial delithiation reaction (the process of increasing the voltage) and the second and subsequent cycles.

When attention is paid to the voltage curve in the second cycle, the electrodes coated with the coating material (Examples 2 to 4) have a higher capacity than those of the non-coated electrodes (Comparative Examples 2 to 4).

In addition, in the electrodes coated with the coating material (Examples 2 to 4), the polarization of the charge-discharge curve is smaller and the input-output characteristics are excellent, as compared with the non-coated electrodes (Comparative Examples 2 to 4). The above results reveal that, even when sulfur-modified polyacrylonitrile pulverized by mechanical pulverization is used, an effect of suppressing a reversible decrease in electric capacity is provided by coating the electrode with the coating material. The results also show that electrodes excellent in input-output characteristics are obtained. It is considered that elution of lithium polysulfide into the electrolytic solution is suppressed by coating the electrode with the coating material.

As described above, preferred embodiments of the present invention have been described with reference to the drawings, but various additions, modifications, or deletions can be made without departing from the spirit of the present invention. For example, various concentrations and proportions of the coating material and the configuration of the active material layer are not limited to the above-described embodiments. In the above embodiment, the lithium ion battery has been described as an example, but the present invention can be applied not only to the lithium ion battery, but also to other non-aqueous electrolyte secondary batteries such as a sodium ion battery and a potassium ion battery, or other non-aqueous electrolyte capacitors such as a lithium ion capacitor, a sodium ion capacitor, and a potassium ion capacitor. Accordingly, such batteries and capacitors are also included within the scope of the present invention.

**Claims**

1. An electrode used in a non-aqueous electrolyte power storage device containing a sulfur-based material that generates hydrogen sulfide gas by contact with moisture in a cell, the non-aqueous electrolyte power storage device including a positive electrode, a negative electrode, and an electrolyte, the sulfur-based material being contained in at least any of the positive electrode, the negative electrode, and the electrolyte, the electrode comprising:

   a current collector;
   an electrode active material layer; and
   a coating material, wherein
   the coating material has at least one of a silicate containing a siloxane bond as a component and/or a silica fine particle aggregate containing a siloxane bond as a component,
   the silicate containing a siloxane bond or the silica fine particle aggregate containing a siloxane bond has a silanol group,
   the coating material is present on at least a surface of the electrode active material layer, and
   the electrode active material layer contains an active material capable of being alloyed with a metal element identical to an ion species responsible for electrical conduction or an electrode active material capable of absorbing ions responsible for electrical conduction, and a resin-based binder.

2. The electrode according to claim 1, wherein the coating material is present in the electrode active material layer.

3. The electrode according to claim 1 or 2, wherein

   the electrode active material layer is a porous body having voids,
   all of the voids in the electrode active material layer are not filled with the coating material, and
   the voids exist in the electrode active material layer.

4. The electrode according to any one of claims 1 to 3, wherein

   the electrode active material layer is a porous body having a porosity of 5% or more and 70% or less, and
   a surface of the voids is coated with the coating material.

5. The electrode according to any one of claims 1 to 4, wherein a thickness of the coating material present on a surface of the voids is 10 nm or more and 5,000 nm or less.

6. The electrode according to any one of claims 1 to 5, wherein the sulfur-based material is contained in the electrode.

7. The electrode according to any one of claims 1 to 6, wherein the silicate has an amorphous structure represented by the general formula $A_2O \cdot nSiO_2$, where A contains at least one alkali metal element selected from Li, Na, K, Rb, or Cs, a guanidine group, a triethanolammonium group, or a tetramethanolammonium group, and n is 0.5 or more and 5.0 or less.

8. The electrode according to any one of claims 1 to 7, wherein in the coating material, an amount of the silanol group in the coating material as measured by a method of determining the amount of the silanol group from attribution of a spectrum obtained by dipolar decoupling and/or a magic angle rotation method in Si-NMR measurement is 100 ppm or more.

9. The electrode according to any one of claims 1 to 8, wherein

   the coating material contains at least one transition metal element selected from Mn, Fe, Co, Ni, Cu, Zn, or Al, and
   a content of the transition metal element is 1 mol% or more and 80 mol% or less when a total amount of the transition metal element and the silicon element is 100 mol%.

10. The electrode according to any one of claims 1 to 9, wherein the coating material further contains $A_2CO_3$ where A is at least one alkali metal element selected from Li, Na, K, Rb, or Cs.

11. A non-aqueous electrolyte power storage device comprising the electrode according to any one of claims 1 to 10.

**12.** The non-aqueous electrolyte power storage device according to claim 11, wherein the sulfur-based material is contained in the electrolyte.

**13.** The non-aqueous electrolyte power storage device according to claim 12, wherein the electrolyte is a solid electrolyte.

**14.** The non-aqueous electrolyte power storage device according to any one of claims 11 to 13, wherein when the electrolyte or the electrode comes into contact with moisture, the coating material traps hydrogen sulfide gas generated outside the electrode active material layer.

**15.** The non-aqueous electrolyte power storage device according to any one of claims 11 to 14, wherein the electrode active material layer contains an active material capable of being alloyed with lithium metal, an electrode active material capable of absorbing or adsorbing lithium metal ions, an active material capable of being alloyed with sodium metal, an electrode active material capable of absorbing or adsorbing sodium metal ions, an active material capable of being alloyed with potassium metal, an electrode active material capable of absorbing or adsorbing potassium metal ions, an active material capable of being alloyed with magnesium metal, an electrode active material capable of absorbing or adsorbing magnesium metal ions, an active material capable of being alloyed with calcium metal, an electrode active material capable of absorbing or adsorbing calcium metal ions, an active material capable of being alloyed with aluminum metal, or an electrode active material capable of absorbing or adsorbing aluminum metal ions, and a resin-based binder.

**16.** A method for producing a non-aqueous electrolyte power storage device containing a sulfur-based material that generates hydrogen sulfide gas by contact with moisture in an electrode or an electrolyte, the method comprising:

an electrode production step including:

a step A of mixing an active material capable of being alloyed with a metal element identical to an ion species responsible for electrical conduction or an active material capable of absorbing ions responsible for electrical conduction, a binder, and a solvent to form a slurry;
a step B of applying or filling the slurry to a current collector having a predetermined shape to form an active material layer; and
a step C of applying a coating material containing at least one of an aqueous silicate solution having a silanol group or a silica fine particle dispersion having a silanol group to the active material layer; and

an assembly step of combining the electrode and the electrolyte.

**17.** The method for producing a non-aqueous electrolyte power storage device according to claim 16, wherein the electrode production step further includes a step D of heat-treating the active material layer coated with the coating material to form a siloxane bond and a silanol group on the coating material.

**18.** The method for producing a non-aqueous electrolyte power storage device according to claim 17, wherein in the step D, a siloxane bond and a silanol group are formed on the coating material by heat treatment at 100°C or higher and 300°C or lower in an environment of a dew point temperature of -20°C or lower.

**FIG. 1**

BARRIER MATERIAL OF MOISTURE AND TRAPPING MATERIAL OF HYDROGEN SULFIDE GAS

BINDER AND CONDUCTIVE AUXILIARY AGENT

ACTIVE MATERIAL

CURRENT COLLECTOR

CROSS-SECTIONAL EXAMPLE OF ELECTRODE COATED WITH
TRAPPING MATERIAL OF HYDROGEN SULFIDE GAS

EP 4 047 676 A1

FIG. 2

**(a)**

BINDER AND CONDUCTIVE AUXILIARY AGENT

**(b)** BARRIER MATERIAL OF MOISTURE AND TRAPPING MATERIAL OF HYDROGEN SULFIDE GAS

BINDER AND CONDUCTIVE AUXILIARY AGENT

ACTIVE MATERIAL (HYDROGEN SULFIDE GAS SOURCE)

ARROWS IN DRAWINGS INDICATE GAS EXTERNAL RELEASE PATHS WHEN HYDROGEN SULFIDE GAS IS GENERATED.

(a) WITHOUT COATING MATERIAL (b) WITH COATING MATERIAL

## FIG. 3

POSITIVE ELECTRODE
ACTIVE MATERIAL
(HYDROGEN SULFIDE
GAS SOURCE)

SEPARATOR

TRAPPING MATERIAL OF
HYDROGEN SULFIDE GAS

BINDER AND CONDUCTIVE
AUXILIARY AGENT

NEGATIVE ELECTRODE
ACTIVE MATERIAL

CURRENT COLLECTOR

CROSS-SECTIONAL EXAMPLE OF BATTERY USING NEGATIVE ELECTRODE COATED WITH
TRAPPING MATERIAL OF HYDROGEN SULFIDE GAS AND SULFUR-BASED POSITIVE ELECTRODE

EP 4 047 676 A1

FIG. 4

POSITIVE ELECTRODE
CURRENT COLLECTOR

BINDER AND CONDUCTIVE
AUXILIARY AGENT

TRAPPING MATERIAL OF
HYDROGEN SULFIDE GAS

POSITIVE ELECTRODE
ACTIVE MATERIAL

SOLID ELECTROLYTE
(HYDROGEN SULFIDE
GAS SOURCE)

BINDER AND CONDUCTIVE
AUXILIARY AGENT

NEGATIVE ELECTRODE
ACTIVE MATERIAL

NEGATIVE ELECTRODE
CURRENT COLLECTOR

CROSS-SECTIONAL EXAMPLE OF ALL-SOLID BATTERY USING NEGATIVE ELECTRODE
COATED WITH TRAPPING MATERIAL OF HYDROGEN SULFIDE GAS

EP 4 047 676 A1

FIG. 5

POSITIVE ELECTRODE CURRENT COLLECTOR

BINDER AND CONDUCTIVE AUXILIARY AGENT

TRAPPING MATERIAL OF HYDROGEN SULFIDE GAS

POSITIVE ELECTRODE ACTIVE MATERIAL

SOLID ELECTROLYTE (HYDROGEN SULFIDE GAS SOURCE)

TRAPPING MATERIAL OF HYDROGEN SULFIDE GAS

BINDER AND CONDUCTIVE AUXILIARY AGENT

NEGATIVE ELECTRODE ACTIVE MATERIAL

NEGATIVE ELECTRODE CURRENT COLLECTOR

CROSS-SECTIONAL EXAMPLE OF ALL-SOLID BATTERY USING POSITIVE ELECTRODE COATED WITH TRAPPING MATERIAL OF HYDROGEN SULFIDE GAS AND NEGATIVE ELECTRODE COATED WITH TRAPPING MATERIAL OF HYDROGEN SULFIDE GAS

EP 4 047 676 A1

FIG. 6

(a)

(b)

(c)

(d)

(e)

(f)

FIG. 7

FIG. 8

1CYCLE(COMPARATIVE EXAMPLE 3)
2CYCLE(COMPARATIVE EXAMPLE 3)
1CYCLE(EXAMPLE 3)
2CYCLE(EXAMPLE 3)

EXAMPLE 3

COMPARATIVE EXAMPLE 3

Voltage (V)

Capacity (mAh/g)

FIG. 9

Legend:
- —·—·— 1CYCLE(COMPARATIVE EXAMPLE 4)
- —··—··— 2CYCLE(COMPARATIVE EXAMPLE 4)
- ———— 1CYCLE(EXAMPLE 4)
- - - - - - 2CYCLE(EXAMPLE 4)

EP 4 047 676 A1

**INTERNATIONAL SEARCH REPORT**

| International application No. |
| --- |
| PCT/JP2020/038686 |

**A.  CLASSIFICATION OF SUBJECT MATTER**
H01M  4/13(2010.01)i;  H01M  4/137(2010.01)i;  H01M  4/139(2010.01)i;  H01M
4/1397(2010.01)i;  H01M  4/62(2006.01)i;  H01G  11/06(2013.01)i;  H01G
11/26(2013.01)i;  H01G  11/30(2013.01)i;  H01G  11/50(2013.01)i;  H01G
11/56(2013.01)i;  H01G  11/86(2013.01)i;  H01M  10/052(2010.01)i;  H01M
10/054(2010.01)i; H01M 10/0562(2010.01)i; H01M 10/058(2010.01)i
FI:       H01M10/058;  H01M4/62  Z;  H01M10/0562;  H01M10/054;  H01G11/50;
          H01G11/06;  H01G11/26;  H01G11/30;  H01G11/56;  H01M4/137;
          H01M4/139;  H01M4/1397;  H01M10/052;  H01G11/86;  H01M4/13
According to International Patent Classification (IPC) or to both national classification and IPC

**B.  FIELDS SEARCHED**

Minimum documentation searched (classification system followed by classification symbols)
H01M4/13;    H01M4/137;    H01M4/139;    H01M4/1397;    H01M4/62;    H01G11/06;
H01G11/26;    H01G11/30;    H01G11/50;    H01G11/56;    H01G11/86;    H01M10/052;
H01M10/054;  H01M10/0562;  H01M10/058

Documentation searched other than minimum documentation to the extent that such documents are included in the fields searched
    Published examined utility model applications of Japan    1922–1996
    Published unexamined utility model applications of Japan    1971–2020
    Registered utility model specifications of Japan    1996–2020
    Published registered utility model applications of Japan    1994–2020

Electronic data base consulted during the international search (name of data base and, where practicable, search terms used)
    JSTPlus (JDreamIII)

**C.  DOCUMENTS CONSIDERED TO BE RELEVANT**

| Category* | Citation of document, with indication, where appropriate, of the relevant passages | Relevant to claim No. |
| --- | --- | --- |
| X | JP 2018-063912 A (ATTACCATO LIMITED LIABILITY COMPANY) 19 April 2018 (2018-04-19) paragraphs [0063]-[0066], [0098]-[0099], [0105], [0128]-[0133], [0136], [0140], [0159]-[0160], [0166], [0176]-[0181], [0222], table 5, example 51, fig. 1 | 1-13, 15-18 |
| A | paragraphs [0063]-[0066], [0098]-[0099], [0105], [0128]-[0133], [0136], [0140], [0159]-[0160], [0166], [0176]-[0181], [0222], table 5, example 51, fig. 1 | 14 |
| X | WO 2012/105009 A1 (TOYOTA MOTOR CORP.) 09 August 2012 (2012-08-09) paragraphs [0020], [0027], [0070]-[0081], [0091] | 1-8, 11-13, 15 |
| A | paragraphs [0020], [0027], [0070]-[0081], [0091] | 9-10, 14, 16-18 |

☒  Further documents are listed in the continuation of Box C.    ☒  See patent family annex.

| | |
| --- | --- |
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| 10 December 2020 (10.12.2020) | 22 December 2020 (22.12.2020) |

| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |

Form PCT/ISA/210 (second sheet) (January 2015)

**INTERNATIONAL SEARCH REPORT**

| International application No. |
| --- |
| PCT/JP2020/038686 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2005-063731 A (JAPAN STORAGE BATTERY CO., LTD.) 10 March 2005 (2005-03-10) paragraphs [0070]-[0128] | 1-18 |
| A | JP 2018-041586 A (TOYOTA MOTOR CORP.) 15 March 2018 (2018-03-15) paragraphs [0063]-[0067] | 1-18 |
| P, X | WO 2020/105735 A1 (ATTACCATO LIMITED LIABILITY COMPANY) 28 May 2020 (2020-05-28) paragraphs [0097]-[0098], [0187]-[0215], claims 1-28, fig. 1-6 | 1-18 |

Form PCT/ISA/210 (continuation of second sheet) (January 2015)

International application no.

PCT/JP2020/038686

| Patent Documents referred in the Report | Publication Date | Patent Family | Publication Date |
|---|---|---|---|
| JP 2018-063912 A | 19 Apr. 2018 | (Family: none) | |
| WO 2012/105009 A1 | 09 Aug. 2012 | US 2013/0316237 A1 paragraphs [0032], [0042], [0092]-[0108], [0120]-[0121] CN 103339767 A | |
| JP 2005-063731 A | 10 Mar. 2005 | (Family: none) | |
| JP 2018-041586 A | 15 Mar. 2018 | US 2018/0069243 A1 paragraphs [0091]-[0100] | |
| WO 2020/105735 A1 | 28 May 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4833048 B
- JP 2018065980 A
- JP 2002154815 A
- JP 2003123758 A
- WO 2010044437 A
- JP 2018085291 A
- JP 2002164084 A

- JP 2013196878 A
- WO 2015030053 A
- JP 2008103245 A
- JP 2015088437 A
- JP 5525003 B
- JP 6149147 B
- JP 2018063912 A

**Non-patent literature cited in the description**

- **TAKUHIRO MIYUKI ; TOSHIKATSU KOJIMA ; TETSUO SAKAI.** The Latest Technological Trend of Rare Metal-Free Secondary Batteries. CMC Publishing Co., Ltd, 2013
- **TETSUO SAKAI ; TAKUHIRO MIYUKI ; TAKASHI MUKAI.** *Battery Technology,* 2013, vol. 25, 65-74
- **TATSUYA KUBO.** *Industrial Material,* 2015, vol. 63 (12), 35-38

- **AKITOSHI HAYASHI ; TAKAMASA OHTOMO ; FUMINORI MIZUNO ; KIYOHARU TADANAGA ; MASAHIRO TATSUMISAGO.** *Electrochemistry Communications,* 2003, vol. 5 (8), 701-705
- **TAICHI SAKAMOTO ; TAKUHIRO MIYUKI ; TETSUO SAKAI.** Collection of Measurement and Analysis Data of Lithium Secondary Battery Members. Technical Information Institute Co. Ltd, 2012, vol. 30, 200-205
- The Latest Technological Trend of Rare Metal-Free Secondary Batteries. CMC Publishing Co., Ltd, 2013, vol. 4, 125-135